(19) **Europäisches Patentamt / European Patent Office / Office européen des brevets**

(11) **EP 4 694 441 A2**

(12) **EUROPEAN PATENT APPLICATION**

(43) Date of publication:
**11.02.2026 Bulletin 2026/07**

(21) Application number: **25203219.8**

(22) Date of filing: **24.08.2022**

(51) International Patent Classification (IPC):
**H04W 72/04** $^{(2023.01)}$

(52) Cooperative Patent Classification (CPC):
**H04W 72/04; H04L 5/001; H04L 5/0053; H04L 5/0094;** H04L 5/0012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2021 CN 202111022179**
**26.09.2021 CN 202111131008**

(62) Document number(s) of the earlier application(s) in accordance with Art. 76 EPC:
**22863273.3 / 4 387 146**

(71) Applicant: **Huawei Technologies Co., Ltd.**
**Shenzhen, Guangdong 518129 (CN)**

(72) Inventor: **LI, Qiang**
**Shenzhen, Guangdong, 518129 (CN)**

(74) Representative: **MERH-IP Matias Erny Reichl Hoffmann**
**Patentanwälte PartG mbB**
**Paul-Heyse-Straße 29**
**80336 München (DE)**

Remarks:
•This application was filed on 18-09-2025 as a divisional application to the application mentioned under INID code 62.
•Claims filed after the date of receipt of the divisional application (Rule 68(4) EPC).

(54) **COMMUNICATION METHOD AND COMMUNICATION APPARATUS**

(57) Embodiments of this application provide a communication method and apparatus. The method includes: A first terminal device obtains first information, where the first information includes a first formula or a value set of an offset, and the first formula or the value set of the offset is used to determine a physical resource block PRB index; the first terminal device receives second information, where the second information includes a physical uplink control channel PUCCH resource index; and the first terminal device determines a PRB index of a PUCCH resource based on the first information and the PUCCH resource index, where the PUCCH resource is used by the first terminal device to transmit uplink control information. This method can avoid system resource fragmentation and improve resource utilization.

400

| First terminal device | | Network device |

S401: PUCCH resource set configuration information

S410: Obtain first information, where the first information includes a first formula or a value set of an offset

S420: Second information including a PUCCH resource index

S430: Determine a PRB index of a PUCCH resource

S402: Send UCI on the PUCCH resource

FIG. 6

## Description

This application claims priority to Chinese Patent Application No. 202111022179.7, filed with the China National Intellectual Property Administration on September 1, 2021 and entitled "PUCCH RESOURCE INDICATION METHOD", which is incorporated herein by reference in its entirety.

This application claims priority to Chinese Patent Application No. 202111131008.8, filed with the China National Intellectual Property Administration on September 26, 2021 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

Terminal devices with different capabilities have different requirements for a mobile communication system. For example, compared with a normal (normal) terminal device like a smartphone, a reduced capability (reduced capability, RedCap) terminal device like a wearable device or an industrial sensor has a lower requirement for a communication capability. Therefore, a design specification of the reduced capability terminal device may be reduced. For example, a bandwidth supported by the reduced capability terminal device, a quantity of antennas supported by the reduced capability terminal device, and the like may be reduced, to reduce costs and device complexity.

When the terminal devices with different capabilities coexist in a communication network, according to the current protocol specification, before an RRC connection is established, a physical uplink control channel (physical uplink control channel, PUCCH) resource for the reduced capability terminal device is located in an initial uplink bandwidth part (bandwidth part, BWP) of the normal terminal device, and frequency hopping is performed. Frequency hopping of a PUCCH of the reduced capability terminal device can be performed only in a bandwidth supported by the reduced capability terminal device. Because the bandwidth supported by the reduced capability terminal device is relatively narrow, system resource fragmentation is caused, and resource utilization is affected.

Therefore, when the terminal devices with different capabilities coexist in the communication network, how to avoid system resource fragmentation becomes an urgent problem to be resolved.

## SUMMARY

Embodiments of this application provide a communication method and a communication apparatus, to avoid system resource fragmentation and improve resource utilization.

According to a first aspect, a communication method is provided. The method may be performed by a first terminal device, or may be performed by a chip or a circuit disposed in the first terminal device. This is not limited in this application. The following uses an example in which the method is performed by the first terminal device for description.

The method includes: The first terminal device obtains first information, where the first information includes a first formula or a value set of an offset, and the first formula or the value set of the offset is used to determine a physical resource block PRB index; the first terminal device receives second information, where the second information includes a physical uplink control channel PUCCH resource index; and the first terminal device determines a PRB index of a PUCCH resource based on the first information and the PUCCH resource index, where the PUCCH resource is used by the first terminal device to transmit uplink control information.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the first aspect, in some implementations of the first aspect, the method further includes: The first terminal device receives third information from a network device, where the third information includes first indication information, and the first indication information indicates the first formula or the value set of the offset.

With reference to the first aspect, in some implementations of the first aspect, the third information further includes PUCCH resource set configuration information, and the PUCCH resource set configuration information is used to determine the PRB index of the PUCCH resource.

With reference to the first aspect, in some implementations of the first aspect, the first indication information indicates the first formula, and the first formula is

$$X = N_{BWP}^{size} - 1 - RB_{BWP}^{offset} - \left\lfloor \frac{r_{PUCCH}}{N_{CS}} \right\rfloor$$

or

$$X = RB_{BWP}^{offset} + \left\lfloor \frac{r_{PUCCH}}{N_{CS}} \right\rfloor$$

, where $X$ is the PRB index of the PUCCH resource, $N_{BWP}^{size}$ is a quantity of PRBs included in a bandwidth of a first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP includes the PUCCH resource, and the PUCCH resource set configuration information indicates the first PRB offset and the set of initial cyclic shift indexes.

With reference to the first aspect, in some implementations of the first aspect, the first indication information indicates the value set of the offset, the value set of the offset is a first value set of a PRB offset of the PUCCH resource or a second value set of a PRB offset of the PUCCH resource, a value of the PRB offset in the second value set is $N_{BWP}^{size} - Y$, the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

where

$X$ is the PRB index of the PUCCH resource, $N_{BWP}^{size}$ is a quantity of PRBs included in a bandwidth of a first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP includes the PUCCH resource, and $Y$ is a positive integer.

With reference to the first aspect, in some implementations of the first aspect, that a first terminal device obtains first information includes the following.

The first terminal device determines the first information based on a value relationship between a center frequency of a first initial uplink bandwidth part BWP and a center frequency of a second initial uplink BWP, where the first initial uplink BWP includes the PUCCH resource, the second initial uplink BWP is used by a second terminal device to perform uplink transmission, and a maximum channel bandwidth supported by the second terminal device is greater than a maximum channel bandwidth supported by the first terminal device.

With reference to the first aspect, in some implementations of the first aspect, the method further includes: The first terminal device receives third information from a network device, where the third information includes PUCCH resource set configuration information, and the PUCCH resource set configuration information is used to determine the PRB index of the PUCCH resource.

With reference to the first aspect, in some implementations of the first aspect, the first information includes the first formula, and that the first terminal device determines the first information based on a value relationship between a center frequency of a first initial uplink bandwidth part BWP and a center frequency of a second initial uplink BWP includes: When the center frequency of the first initial uplink BWP is greater than the center frequency of the second initial uplink

$$X = N_{BWP}^{size} - 1 - RB_{BWP}^{offset} - \left\lfloor \frac{r_{PUCCH}}{N_{CS}} \right\rfloor$$

BWP, the first terminal device determines that the first formula is ; or when the center frequency of the first initial uplink BWP is less than the center frequency of the second initial uplink BWP, the first

$$X = RB_{BWP}^{offset} + \left\lfloor \frac{r_{PUCCH}}{N_{CS}} \right\rfloor$$

terminal device determines that the first formula is , where $X$ is the PRB index of the PUCCH resource, $N_{BWP}^{size}$ is a quantity of PRBs included in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP includes the PUCCH resource, and the PUCCH resource set configuration information indicates the first PRB offset and the set of initial cyclic shift indexes.

With reference to the first aspect, in some implementations of the first aspect, the first information includes the value set of the offset, and that the first terminal device determines the first information based on a value relationship between a center frequency of a first initial uplink bandwidth part BWP and a center frequency of a second initial uplink BWP includes: When the center frequency of the first initial uplink BWP is greater than the center frequency of the second initial uplink BWP, the first terminal device determines that the value set of the offset is a second value set of a PRB offset of the PUCCH resource, where a value of the PRB offset in the second value set is $N_{BWP}^{size} - Y$; or when the center frequency of the first initial uplink BWP is less than the center frequency of the second initial uplink BWP, the first terminal device determines that the value set of the offset is a first value set of a PRB offset of the PUCCH resource, where the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP includes the PUCCH resource, and $Y$ is a positive integer.

With reference to the first aspect, in some implementations of the first aspect, the third information further indicates a frequency position of the first initial uplink BWP and a frequency position of the second initial uplink BWP, and the method further includes: The first terminal device determines the center frequency of the first initial uplink BWP based on the frequency position of the first initial uplink BWP, and determines the center frequency of the second initial uplink BWP based on the frequency position of the second initial uplink BWP.

With reference to the first aspect, in some implementations of the first aspect, the third information is a system information block 1 SIB1, downlink control information DCI for scheduling SIB1, or a master information block MIB.

With reference to the first aspect, in some implementations of the first aspect, the third information further indicates that no frequency hopping is performed on the PUCCH resource.

With reference to the first aspect, in some implementations of the first aspect, the method further includes: The first terminal device transmits the uplink control information on a resource associated with the PRB index.

With reference to the first aspect, in some implementations of the first aspect, the first terminal device is a first-type terminal device, and the second terminal device is a second-type terminal device.

Optionally, the first terminal device is a reduced capability terminal device, and the second terminal device is a normal terminal device.

According to a second aspect, a communication method is provided. The method may be performed by a network device, or may be performed by a chip or a circuit disposed in the network device. This is not limited in this application. The following uses an example in which the method is performed by the network device for description.

The method includes: The network device sends third information to a first terminal device, where the third information includes first indication information, the first indication information indicates a first formula or a value set of an offset, and the first formula or the value set of the offset is used to determine a physical resource block PRB index; and the network device sends second information to the first terminal device, where the second information includes a physical uplink control channel PUCCH resource index, first information and the PUCCH resource index are used to determine a PRB index of a PUCCH resource, and the PUCCH resource is used by the first terminal device to transmit uplink control information.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the second aspect, in some implementations of the second aspect, the third information further includes PUCCH resource set configuration information, and the PUCCH resource set configuration information is used to determine the PRB index of the PUCCH resource.

With reference to the second aspect, in some implementations of the second aspect, the first information indicates the first formula, and the method further includes: When a PUCCH resource set of the first terminal device is located at an upper edge of a first initial uplink bandwidth part BWP, the network device determines that the first formula is

$$X = N_{BWP}^{size} - 1 - RB_{BWP}^{offset} - \left\lfloor \frac{r_{PUCCH}}{N_{CS}} \right\rfloor$$ ; or when a PUCCH resource set of the first terminal device is located at a lower edge of a first initial uplink BWP, the network device determines that the first formula is $$X = RB_{BWP}^{offset} + \left\lfloor \frac{r_{PUCCH}}{N_{CS}} \right\rfloor$$ , where

$X$ is the PRB index of the PUCCH resource, $N_{BWP}^{size}$ is a quantity of PRBs included in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$ , the first initial uplink BWP includes the PUCCH resource, and the PUCCH resource set configuration information indicates the first PRB offset and the set of initial cyclic shift indexes.

Optionally, in this application, when the PUCCH resource set of the first terminal device is located at a relatively high frequency position of the first initial uplink bandwidth part BWP, the network device may further determine that the first formula is $$X = N_{BWP}^{size} - 1 - RB_{BWP}^{offset} - \left\lfloor \frac{r_{PUCCH}}{N_{CS}} \right\rfloor$$ ; or when the PUCCH resource set of the first terminal device is located at a relatively low frequency position of the first initial uplink BWP, the network device determines that the first formula is $$X = RB_{BWP}^{offset} + \left\lfloor \frac{r_{PUCCH}}{N_{CS}} \right\rfloor$$ . In other words, the method in this application may also be used when the network device determines that the PUCCH resource set of the first terminal device is located at the relatively high or low frequency position in the first initial uplink BWP.

With reference to the second aspect, in some implementations of the second aspect, the first indication information indicates the value set of the offset, and the method further includes: When a PUCCH resource set of the first terminal device is located at an upper edge of a first initial uplink bandwidth part BWP, the network device determines that the value set of the offset is a second value set of a PRB offset of the PUCCH resource, where a value of the PRB offset in the second value set is $N_{BWP}^{size} - Y$; or when a PUCCH resource set of the first terminal device is located at a lower edge of a first initial uplink BWP, the network device determines that the value set of the offset is a first value set of a PRB offset of the PUCCH resource, where the PUCCH resource set configuration information indicates a first PRB offset and a set of initial cyclic shift indexes, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP includes the PUCCH resource, and $Y$ is a positive integer.

Optionally, in this application, when the PUCCH resource set of the first terminal device is located at a relatively high frequency position of the first initial uplink bandwidth part BWP, the network device may further determine that the value set of the offset is the second value set of the PRB offset of the PUCCH resource; or when the PUCCH resource set of the first terminal device is located at a relatively low frequency position of the first initial uplink BWP, the network device determines that the value set of the offset is the first value set of the PRB offset of the PUCCH resource. In other words, the method in this application may also be used when the network device determines that the PUCCH resource set of the first terminal device is located at the relatively high or low frequency position in the first initial uplink BWP.

With reference to the second aspect, in some implementations of the second aspect, the third information is a system information block 1 SIB1, downlink control information DCI for scheduling SIB1, or a master information block MIB.

With reference to the second aspect, in some implementations of the second aspect, the third information further indicates that no frequency hopping is performed on the PUCCH resource.

With reference to the second aspect, in some implementations of the second aspect, the first terminal device is a first-type terminal device, and a second terminal device is a second-type terminal device.

Optionally, the first terminal device is a reduced capability terminal device, and the second terminal device is a normal terminal device.

It should be understood that, in this application, the PUCCH resource set of the first terminal device is located at the upper edge of the first initial uplink BWP, that is, the PUCCH resource set of the first terminal device overlaps an end frequency position of the first initial uplink BWP. The PUCCH resource set of the first terminal device is located at the lower edge of the first initial uplink BWP, that is, the PUCCH resource set of the first terminal device overlaps a start frequency position of the first initial uplink BWP.

It should be further understood that, that the PUCCH resource set of the first terminal device is located at a relatively high frequency position of the first initial uplink BWP may be understood as that a center frequency position of the PUCCH resource set of the first terminal device is higher than a center frequency position of the first initial uplink BWP; or may be understood as that an end frequency position of the PUCCH resource set of the first terminal device is lower than an end frequency position of the first initial uplink BWP, and that a start frequency position of the PUCCH resource set of the first terminal device is higher than a center frequency position of the first initial uplink BWP. That the PUCCH resource set of the first terminal device is located at a relatively low frequency position of the first initial uplink BWP may be understood as that the center frequency position of the PUCCH resource set of the first terminal device is lower than the center frequency position of the first initial uplink BWP; or may be understood as that the start frequency position of the PUCCH resource set of the first terminal device is higher than the start frequency position of the first initial uplink BWP, and the end frequency position of the PUCCH resource set of the first terminal device is lower than the center frequency position of the first initial uplink BWP.

According to a third aspect, a communication method is provided. The method may be performed by a network device, or may be performed by a chip or a circuit disposed in the network device. This is not limited in this application. The following uses an example in which the method is performed by the network device for description.

The method includes: The network device sends third information to a first terminal device, where the third information indicates a frequency position of a first initial uplink bandwidth part BWP and a frequency position of a second initial uplink BWP, the frequency position of the first initial uplink BWP and the frequency position of the second initial uplink BWP are used to determine first information, the first information includes a first formula or a value set of an offset, and the first formula or the value set of the offset is used to determine a physical resource block PRB index; and the network device sends second information to the first terminal device, where the second information includes a physical uplink control channel PUCCH resource index, the first information and the PUCCH resource index are used to determine a PRB index of a PUCCH resource, and the PUCCH resource is used by the first terminal device to transmit uplink control information.

The first initial uplink BWP includes the PUCCH resource, the second initial uplink BWP is used by a second terminal device to perform uplink transmission, and a maximum channel bandwidth supported by the second terminal device is greater than a maximum channel bandwidth supported by the first terminal device.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the third aspect, in some implementations of the third aspect, the third information further includes PUCCH resource set configuration information, and the PUCCH resource set configuration information is used to determine the PRB index of the PUCCH resource.

With reference to the third aspect, in some implementations of the third aspect, the first information includes the first formula, and the first formula is $X = N_{BWP}^{size} - 1 - RB_{BWP}^{offset} - \left\lfloor \dfrac{r_{PUCCH}}{N_{CS}} \right\rfloor$ or $X = RB_{BWP}^{offset} + \left\lfloor \dfrac{r_{PUCCH}}{N_{CS}} \right\rfloor$, where $X$ is

the PRB index of the PUCCH resource, $N_{BWP}^{size}$ is a quantity of PRBs included in a bandwidth of the first initial uplink BWP,

$RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and the PUCCH resource set configuration information indicates the first PRB offset and the set of initial cyclic shift indexes.

With reference to the third aspect, in some implementations of the third aspect, the first information includes the value set of the offset, the value set of the offset is a first value set of a PRB offset of the PUCCH resource or a second value set of a PRB offset of the PUCCH resource, a value of the PRB offset in the second value set is $N_{BWP}^{size} - Y$, the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \dfrac{r_{PUCCH}}{N_{CS}} \right\rfloor,$$

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and $Y$ is a positive integer.

With reference to the third aspect, in some implementations of the third aspect, the third information is a system information block 1 SIB1, downlink control information DCI for scheduling SIB1, or a master information block MIB.

With reference to the third aspect, in some implementations of the third aspect, the third information further indicates that no frequency hopping is performed on the PUCCH resource.

With reference to the third aspect, in some implementations of the third aspect, the first terminal device is a first-type terminal device, and the second terminal device is a second-type terminal device.

Optionally, the first terminal device is a reduced capability terminal device, and the second terminal device is a normal terminal device.

According to a fourth aspect, a communication apparatus is provided. The apparatus may be a first terminal device, or may be a chip or a circuit disposed in the first terminal device. This is not limited in this application.

The apparatus includes: a transceiver unit, configured to obtain first information, where the first information includes a first formula or a value set of an offset, and the first formula or the value set of the offset is used to determine a physical resource block PRB index; and the transceiver unit is further configured to receive second information, where the second information includes a physical uplink control channel PUCCH resource index; and a processing unit, configured to determine a PRB index of a PUCCH resource based on the first information and the PUCCH resource index, where the PUCCH resource is used by the first terminal device to transmit uplink control information.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the fourth aspect, in some implementations of the fourth aspect, the transceiver unit is further configured to receive third information from a network device, where the third information includes first indication information, and the first indication information indicates the first formula or the value set of the offset.

With reference to the fourth aspect, in some implementations of the fourth aspect, the third information further includes PUCCH resource set configuration information, and the PUCCH resource set configuration information is used to determine the PRB index of the PUCCH resource.

With reference to the fourth aspect, in some implementations of the fourth aspect, the first indication information indicates the first formula, and the first formula is $X = N_{BWP}^{size} - 1 - RB_{BWP}^{offset} - \left\lfloor \dfrac{r_{PUCCH}}{N_{CS}} \right\rfloor$ or

$X = RB_{BWP}^{offset} + \left\lfloor \dfrac{r_{PUCCH}}{N_{CS}} \right\rfloor$ , where $X$ is the PRB index of the PUCCH resource, $N_{BWP}^{size}$ is a quantity of PRBs included in a bandwidth of a first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \dfrac{r_{PUCCH}}{N_{CS}} \right\rfloor$ indicates rounding

down a result of $\dfrac{r_{PUCCH}}{N_{CS}}$ , the first initial uplink BWP includes the PUCCH resource, and the PUCCH resource set configuration information indicates the first PRB offset and the set of initial cyclic shift indexes.

With reference to the fourth aspect, in some implementations of the fourth aspect, the first indication information indicates the value set of the offset, the value set of the offset is a first value set of a PRB offset of the PUCCH resource or a second value set of a PRB offset of the PUCCH resource, a value of the PRB offset in the second value set is $N_{BWP}^{size} - Y$ , the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \dfrac{r_{PUCCH}}{N_{CS}} \right\rfloor,$$

where

$X$ is the PRB index of the PUCCH resource, $N_{BWP}^{size}$ is a quantity of PRBs included in a bandwidth of a first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and $Y$ is a positive integer.

With reference to the fourth aspect, in some implementations of the fourth aspect, the processing unit is specifically configured to determine the first information based on a value relationship between a center frequency of a first initial uplink bandwidth part BWP and a center frequency of a second initial uplink BWP, where the first initial uplink BWP includes the PUCCH resource, the second initial uplink BWP is used by a second terminal device to perform uplink transmission, and a maximum channel bandwidth supported by the second terminal device is greater than a maximum channel bandwidth supported by the first terminal device.

With reference to the fourth aspect, in some implementations of the fourth aspect, the transceiver unit is further configured to receive third information from a network device, where the third information includes PUCCH resource set configuration information, and the PUCCH resource set configuration information is used to determine the PRB index of the PUCCH resource.

With reference to the fourth aspect, in some implementations of the fourth aspect, the first information includes the first formula, and the processing unit is specifically configured to: when the center frequency of the first initial uplink BWP is greater than the center frequency of the second initial uplink BWP, determine that the first formula is

$$X = N_{BWP}^{size} - 1 - RB_{BWP}^{offset} - \left\lfloor \frac{r_{PUCCH}}{N_{CS}} \right\rfloor$$

; or when the center frequency of the first initial uplink BWP is less than the center frequency of the second initial uplink BWP, determine that the first formula is

$$X = RB_{BWP}^{offset} + \left\lfloor \frac{r_{PUCCH}}{N_{CS}} \right\rfloor$$

,

where $X$ is the PRB index of the PUCCH resource, $N_{BWP}^{size}$ is a quantity of PRBs included in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and the PUCCH resource set configuration information indicates the first PRB offset and the set of initial cyclic shift indexes.

With reference to the fourth aspect, in some implementations of the fourth aspect, the first information includes the value set of the offset, and the processing unit is specifically configured to: when the center frequency of the first initial uplink BWP is greater than the center frequency of the second initial uplink BWP, determine that the value set of the offset is a second value set of a PRB offset of the PUCCH resource, where a value of the PRB offset in the second value set is $N_{BWP}^{size} - Y$; or when the center frequency of the first initial uplink BWP is less than the center frequency of the second initial uplink BWP, determine that the value set of the offset is a first value set of a PRB offset of the PUCCH resource, where the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor$$

,

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and *Y* is a positive integer.

With reference to the fourth aspect, in some implementations of the fourth aspect, the third information further indicates a frequency position of the first initial uplink BWP and a frequency position of the second initial uplink BWP, and the processing unit is further configured to determine the center frequency of the first initial uplink BWP based on the frequency position of the first initial uplink BWP, and determine the center frequency of the second initial uplink BWP based on the frequency position of the second initial uplink BWP.

With reference to the fourth aspect, in some implementations of the fourth aspect, the third information is a system information block 1 SIB1, downlink control information DCI for scheduling SIB1, or a master information block MIB.

With reference to the fourth aspect, in some implementations of the fourth aspect, the third information further indicates that no frequency hopping is performed on the PUCCH resource.

With reference to the fourth aspect, in some implementations of the fourth aspect, the transceiver unit is further configured to transmit the uplink control information on a resource associated with the PRB index.

With reference to the fourth aspect, in some implementations of the fourth aspect, the apparatus is a first-type terminal device, and the second terminal device is a second-type terminal device.

Optionally, the apparatus is a reduced capability terminal device, and the second terminal device is a normal terminal device.

According to a fifth aspect, a communication apparatus is provided. The apparatus may be a network device, or may be a chip or a circuit disposed in the network device. This is not limited in this application.

The apparatus includes: a transceiver unit, configured to send third information to a first terminal device, where the third information includes first indication information, the first indication information indicates a first formula or a value set of an offset, and the first formula or the value set of the offset is used to determine a physical resource block PRB index. The transceiver unit is further configured to send second information to the first terminal device, where the second information includes a physical uplink control channel PUCCH resource index, first information and the PUCCH resource index are used to determine a PRB index of a PUCCH resource, and the PUCCH resource is used by the first terminal device to transmit uplink control information.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the fifth aspect, in some implementations of the fifth aspect, the third information further includes PUCCH resource set configuration information, and the PUCCH resource set configuration information is used to determine the PRB index of the PUCCH resource.

With reference to the fifth aspect, in some implementations of the fifth aspect, the first information indicates the first formula, and the apparatus further includes a processing unit, configured to: when a PUCCH resource set of the apparatus is located at an upper edge of a first initial uplink bandwidth part BWP, determine that the first formula is

$$X = N_{BWP}^{size} - 1 - RB_{BWP}^{offset} - \left\lfloor \dfrac{r_{PUCCH}}{N_{CS}} \right\rfloor$$

. The processing unit is alternatively configured to: when a PUCCH resource set of the apparatus is located at a lower edge of a first initial uplink BWP, determine that the first formula is

$$X = RB_{BWP}^{offset} + \left\lfloor \dfrac{r_{PUCCH}}{N_{CS}} \right\rfloor$$

, where *X* is the PRB index of the PUCCH resource, $N_{BWP}^{size}$ is a quantity of PRBs included in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \dfrac{r_{PUCCH}}{N_{CS}} \right\rfloor$ indicates rounding down a

result of $\dfrac{r_{PUCCH}}{N_{CS}}$ , the first initial uplink BWP includes the PUCCH resource, and the PUCCH resource set configuration information indicates the first PRB offset and the set of initial cyclic shift indexes.

With reference to the fifth aspect, in some implementations of the fifth aspect, the first indication information indicates the value set of the offset, and the apparatus further includes a processing unit, configured to: when a PUCCH resource set of the apparatus is located at an upper edge of a first initial uplink bandwidth part BWP, determine that the value set of the offset is a second value set of a PRB offset of the PUCCH resource, where a value of the PRB offset in the second value set is $N_{BWP}^{size} - Y$ . The processing unit is alternatively configured to: when a PUCCH resource set of the apparatus is located at a lower edge of a first initial uplink BWP, determine that the value set of the offset is a first value set of a PRB offset of the PUCCH resource, where the PUCCH resource set configuration information indicates a first PRB offset and a set of initial cyclic shift indexes, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$ , the first initial uplink BWP includes the PUCCH resource, and $Y$ is a positive integer.

With reference to the fifth aspect, in some implementations of the fifth aspect, the third information is a system information block 1 SIB1, downlink control information DCI for scheduling SIB1, or a master information block MIB.

With reference to the fifth aspect, in some implementations of the fifth aspect, the third information further indicates that no frequency hopping is performed on the PUCCH resource.

With reference to the fifth aspect, in some implementations of the fifth aspect, the first terminal device is a first-type terminal device, and a second terminal device is a second-type terminal device.

Optionally, the first terminal device is a reduced capability terminal device, and the second terminal device is a normal terminal device.

According to a sixth aspect, a communication apparatus is provided. The apparatus may be performed by a network device, or may be performed by a chip or a circuit disposed in the network device. This is not limited in this application. The following uses an example in which the apparatus is performed by the network device for description.

The apparatus includes: a transceiver unit, configured to send third information to a first terminal device, where the third information indicates a frequency position of a first initial uplink bandwidth part BWP and a frequency position of a second initial uplink BWP, the frequency position of the first initial uplink BWP and the frequency position of the second initial uplink BWP are used to determine first information, the first information includes a first formula or a value set of an offset, and the first formula or the value set of the offset is used to determine a physical resource block PRB index. The transceiver unit is further configured to second information to the first terminal device, where the second information includes a physical uplink control channel PUCCH resource index, the first information and the PUCCH resource index are used to determine a PRB index of a PUCCH resource, and the PUCCH resource is used by the first terminal device to transmit uplink control information, where the first initial uplink BWP includes the PUCCH resource, the second initial uplink BWP is used by a second terminal device to perform uplink transmission, and a maximum channel bandwidth supported by the second terminal device is greater than a maximum channel bandwidth supported by the first terminal device.

According to the solution in this embodiment of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit the uplink control information. This manner can avoid system resource fragmentation and improve resource utilization.

In addition, in this embodiment of this application, a larger continuous bandwidth can be configured for a normal terminal device, to improve a transmission rate of the terminal device.

With reference to the sixth aspect, in some implementations of the sixth aspect, the third information further includes PUCCH resource set configuration information, and the PUCCH resource set configuration information is used to determine the PRB index of the PUCCH resource.

With reference to the sixth aspect, in some implementations of the sixth aspect, the first information includes the first formula, and the first formula is $X = N_{BWP}^{size} - 1 - RB_{BWP}^{offset} - \left\lfloor \dfrac{r_{PUCCH}}{N_{CS}} \right\rfloor$ or $X = RB_{BWP}^{offset} + \left\lfloor \dfrac{r_{PUCCH}}{N_{CS}} \right\rfloor$, where $X$ is

the PRB index of the PUCCH resource, $N_{BWP}^{size}$ is a quantity of PRBs included in a bandwidth of the first initial uplink BWP,

$RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and the PUCCH resource set configuration information indicates the first PRB offset and the set of initial cyclic shift indexes.

With reference to the sixth aspect, in some implementations of the sixth aspect, the first information includes the value set of the offset, the value set of the offset is a first value set of a PRB offset of the PUCCH resource or a second value set of a PRB offset of the PUCCH resource, a value of the PRB offset in the second value set is $N_{BWP}^{size} - Y$, the PUCCH resource set configuration information indicates a first PRB offset and a set of initial cyclic shift indexes, the value set of the offset includes the first PRB offset, and the PRB index of the PUCCH resource, the first PRB offset, and the PUCCH resource index satisfy the following correspondence:

$$X = RB_{BWP}^{offset} + \left\lfloor \dfrac{r_{PUCCH}}{N_{CS}} \right\rfloor,$$

where

$X$ is the PRB index of the PUCCH resource, $N_{BWP}^{size}$ is a quantity of PRBs included in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \dfrac{r_{PUCCH}}{N_{CS}} \right\rfloor$ indicates rounding down a result of $\dfrac{r_{PUCCH}}{N_{CS}}$, the first initial uplink BWP includes the PUCCH resource, and $Y$ is a positive integer.

With reference to the sixth aspect, in some implementations of the sixth aspect, the third information is a system information block 1 SIB1, downlink control information DCI for scheduling SIB1, or a master information block MIB.

With reference to the sixth aspect, in some implementations of the sixth aspect, the third information further indicates that no frequency hopping is performed on the PUCCH resource.

With reference to the sixth aspect, in some implementations of the sixth aspect, the first terminal device is a first-type terminal device, and the second terminal device is a second-type terminal device.

Optionally, the first terminal device is a reduced capability terminal device, and the second terminal device is a normal terminal device.

According to a seventh aspect, a communication apparatus is provided, including at least one processor. The at least one processor is coupled to at least one memory, and the at least one processor is configured to execute a computer program or an instruction stored in the at least one memory, so that the communication apparatus performs the method according to any one of the first aspect to the third aspect or any one of the possible implementations of the first aspect to the third aspect.

According to an eighth aspect, a computer-readable storage medium is provided. The computer-readable storage medium stores a computer program or instructions, and when the computer program or the instructions are run on a computer, the computer is enabled to perform the method according to any one of the first aspect to the third aspect or any one of the possible implementations of the first aspect to the third aspect.

According to a ninth aspect, a chip system is provided, including a processor. The processor is configured to execute a computer program or instructions in a memory, to implement the method according to any one of the first aspect to the third aspect or any one of the possible implementations of the first aspect to the third aspect.

According to a tenth aspect, a computer program product is provided, including a computer program or instructions. When the computer program or the instructions are run, the method according to any one of the first aspect to the third aspect or any one of the possible implementations of the first aspect to the third aspect is performed.

According to an eleventh aspect, a communication system is provided. The communication system includes the first terminal device and the network device corresponding to the foregoing aspects.

## BRIEF DESCRIPTION OF DRAWINGS

FIG. 1 is a schematic diagram of a communication system applicable to an embodiment of this application;

FIG. 2 is a schematic diagram of a hybrid automatic repeat request (hybrid automatic repeat request, HARQ) feedback manner according to this application;

FIG. 3 is a schematic diagram of a random access process of a terminal device according to this application;

FIG. 4 is a schematic diagram of a spectrum resource position of a terminal device according to this application;

FIG. 5 is a schematic diagram of resource positions of two terminals with different capabilities according to this application;

FIG. 6 is a schematic diagram of a communication method according to this application;

FIG. 7 is a schematic diagram of a spectrum resource position of a first terminal device according to this application;

FIG. 8 is a schematic diagram of a spectrum resource position of a first terminal device according to this application;

FIG. 9 is a schematic block diagram of a communication apparatus according to an embodiment of this application;

FIG. 10 is a schematic block diagram of a communication apparatus according to an embodiment of this application; and

FIG. 11 is a block diagram of a structure of a communication apparatus according to an embodiment of this application.

## DESCRIPTION OF EMBODIMENTS

The following describes technical solutions of this application with reference to accompanying drawings.

The technical solutions of embodiments of this application may be applied to various communication systems, such as a global system for mobile communication (Global System Of Mobile Communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, or new radio (new radio, NR). The 5G mobile communication system may be a non-standalone (non-standalone, NSA) communication system or a standalone (standalone, SA) communication system.

The technical solutions provided in this application may also be applied to machine type communication (machine type communication, MTC), long term evolution-machine (long term evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may also be applied to a future communication system, for example, a 6th generation (6th Generation, 6G) mobile communication system. This is not limited in this application.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity to a user, for example, a handheld device or vehicle-mounted device with a wireless connectivity function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a home appliance like a television, a smart STB, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (Internet of things, IoT) system. The IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrow band (narrow band, NB) technology.

In embodiments of this application, the terminal device may alternatively be a vehicle or an entire vehicle, and may implement communication by using the internet of vehicles, or may be a component located in a vehicle (for example, placed in a vehicle or installed in a vehicle), namely, a vehicle-mounted terminal device, a vehicle-mounted module, or an on-board unit (on-board unit, OBU).

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

It should be noted that the terminal devices in this application may be classified into a first-type terminal device and a second-type terminal device. The first-type terminal device is, for example, low-complexity UE or reduced capability UE (reduced capability UE, RedCap UE), and the second-type terminal device may be normal capability UE (normal UE or legacy UE), for example, eMBB UE.

The first-type terminal device and the second-type terminal device have different feature parameters. The feature parameters include one or more of the following: a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a latency requirement, a processing capability, a protocol release, a duplex mode, a service, and the like.

The following describes the foregoing feature parameters in detail by using examples.

1. Bandwidth: The bandwidth is alternatively a channel bandwidth, or a maximum channel bandwidth supported or configured by the terminal device. Bandwidths of the first-type terminal device and the second-type terminal device are different. For example, the bandwidth of the first-type terminal device may be 20 MHz, 10 MHz, or 5 MHz, and the bandwidth of the second-type terminal device may be 100 MHz. It may be understood that, with development of communication technologies, a maximum channel bandwidth supported by the first-type terminal device may no longer be 20 MHz, 10 MHz, or 5 MHz, but evolve to a wider or narrower bandwidth, for example, 3 MHz, 25 MHz, or 50 MHz.

2. Quantity of supported or configured resources: The quantity of resources may be a quantity of resource blocks (resource blocks, RBs), time-frequency resource elements (resource elements, REs), subcarriers, RB groups, resource element group bundle (resource element group bundle, REG bundle) units, control channel elements, subframes, radio frames, slots, mini-slots, and/or symbols. A quantity of resources supported or configured by the first-type terminal device is different from a quantity of resources supported or configured by the second-type terminal device. For example, the quantity of resources supported by the first-type terminal device is 48 RBs, and the quantity of resources supported by the second-type terminal device is 96 RBs.

3. Quantity of transmit antenna ports and/or quantity of receive antenna ports: A quantity of transmit antenna ports and/or a quantity of receive antenna ports of the first-type terminal device is different from those/that of the second-type terminal device. For example, the quantity of transmit antenna ports of the first-type terminal device may be 1, and the quantity of receive antenna ports of the first-type terminal device may be 2; and the quantity of transmit antenna ports of the second-type terminal device may be 2, and the quantity of receive antenna ports of the second-type terminal device may be 4.

4. Quantity of radio frequency channels: A quantity of radio frequency channels of the first-type terminal device is different from that of the second-type terminal device. For example, the quantity of radio frequency channels of the first-type terminal device may be 1, and the quantity of radio frequency channels of the second-type terminal device may be 2.

5. Quantity of HARQ processes: A quantity of HARQ processes supported by the first-type terminal device is different from that supported by the second-type terminal device. For example, the quantity of HARQ processes of the first-type terminal device may be 8, and the quantity of HARQ processes of the second-type terminal device may be 16.

6. Supported peak rate: A maximum peak rate of the first-type terminal device is different from that of the second-type terminal device. For example, the maximum peak rate supported by the first-type terminal device may be 100 Mbps, and the peak rate supported by the second-type terminal device may be 200 Mbps.

7. Application scenario: The first-type terminal device and the second-type terminal device serve in different application scenarios. For example, the first-type terminal device is applied to industrial wireless sensing, video surveillance, a wearable device, and the like; and the second-type terminal device is applied to mobile communication, video internet access, and the like.

8. Latency requirement: The first-type terminal device and the second-type terminal device have different transmission latency requirements. For example, a latency requirement of the first-type terminal device may be 500 milliseconds, and a latency requirement of the second-type terminal device may be 100 milliseconds.

9. Processing capability: In different subcarrier space (subcarrier space, SCS) conditions, the first-type terminal device and the second-type terminal device have different processing speeds on channel or data processing time sequences. For example, the first-type terminal device does not support a complex operation, where the complex operation may include artificial intelligence (artificial intelligence, AI) and virtual reality (virtual reality, VR) rendering. The second-type terminal device supports the complex operation. It is understood that a processing capability of the first-type terminal device is lower than that of the second-type terminal device.

10. Protocol release: The first-type terminal device and the second terminal device are terminal devices of different protocol releases. For example, a protocol release supported by the first-type terminal device is Release 17 and a protocol release after Release 17, and a protocol release supported by the second-type terminal device is a protocol release before Release 17, for example, Release 15 or Release 16.

11. Duplex mode: The duplex mode includes half duplex and full duplex. The first-type terminal device and the second-type terminal device use different duplex modes. For example, the first-type terminal device works in half-duplex mode, and the second-type terminal device works in full-duplex mode.

12. Service: The service includes but is not limited to an internet of things application, for example, video surveillance and mobile broadband (mobile broadband, MBB). The first-type terminal device and the second-type terminal device support different services. For example, a service supported by the first-type terminal device is the video surveillance, and a service supported by the second-type terminal device is the mobile broadband MBB. This is not limited in embodiments of this application.

It should be understood that another type of terminal device or a future new type of terminal device that also supports the technical solutions of this application also falls within the protection scope of this application.

In this application, a first terminal device or a terminal device #1 may be an example of the first-type terminal device, and a second terminal device or a terminal device #2 may be an example of the second-type terminal device.

In embodiments of this application, a network device may be any device having the wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be a gNB or a transmission point (TRP or TP) in a 5G system, for example, an NR system, or one antenna panel or a group of antenna panels (including a plurality of antenna panels) of a base station in a 5G system; or may be a network node, for example, a baseband unit (BBU) or a distributed unit (distributed unit, DU), included in a gNB or a transmission point, a base station in a next generation 6G communication system, or the like.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher-layer signaling such as RRC layer signaling may also be considered as being sent by the DU or sent by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

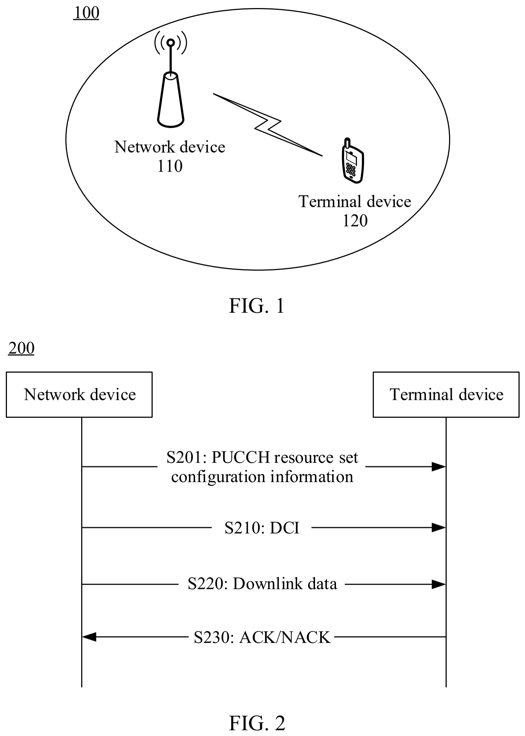

FIG. 1 is a schematic diagram of a communication system 100 to which a communication method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system, the configured plurality of antennas may include at least one transmit antenna configured to send a signal and at least one receive antenna configured to receive a signal. Therefore, the communication devices in the communication system, for example, the network device 110 and the terminal device 120, may communicate with each other by using a multi-antenna technology.

It should be understood that FIG. 1 is merely a simplified schematic diagram used as an example for ease of understanding. The communication system may further include another network device or another terminal device that is not shown in FIG. 1.

It should be further understood that FIG. 1 shows merely an application scenario in embodiments of this application. The method provided in embodiments of this application is not limited to communication between a network device and a terminal device, may be further applied to communication between terminal devices, and the like. A scenario to which the method is applied is not limited in this application. In embodiments shown below, for ease of understanding and description, interaction between a network device and a terminal device is used as an example to describe in detail the method provided in embodiments of this application.

In a physical layer transmission protocol of a wireless communication system, time-frequency resources for wireless communication are divided into different channels for transmitting different types of information. For example, a physical downlink shared channel (physical downlink shared channel, PDSCH) is used to transmit downlink data, a physical downlink control channel (physical downlink control channel, PDCCH) is used to transmit downlink control information (downlink control information, DCI), a physical uplink data channel (physical uplink shared channel, PUSCH) is used to transmit uplink data, and a physical uplink control channel (physical uplink control channel, PUCCH) is used to transmit uplink control information (uplink control information, UCI). The UCI includes channel state information (channel state information, CSI), an acknowledgment (Acknowledgement, ACK) or a negative acknowledgment (Negative Acknowledgement, NACK) to downlink data, an uplink scheduling request (scheduling request, SR), and the like. When the terminal device sends the UCI, the network device configures or indicates, in advance, a PUCCH resource specifically used by the terminal device, so that the terminal device learns of a slot (slot), a physical resource block (physical resource block, PRB), or a cyclic shift (cyclic shift, CS) in which the UCI is sent. The PRB is a bandwidth unit for an NR system. FIG. 2 is used as an example to describe configuration and use of a PUCCH resource.

FIG. 2 is a schematic diagram of a hybrid automatic repeat request (hybrid automatic repeat request, HARQ) feedback manner according to this application.

S201: A network device configures a PUCCH resource set for a terminal device, where the PUCCH resource set includes a plurality of PUCCH resources.

S210: The network device sends DCI to the terminal device, and the terminal device receives the DCI, where the network device indicates, in the DCI, transmission parameters such as a time-frequency resource for sending a PDSCH and a used modulation and coding scheme; and the DCI also indicates a PUCCH resource that needs to be used when the terminal device performs ACK/NACK feedback for the PDSCH, that is, the PUCCH resource is selected from the preconfigured PUCCH resource set.

S220: The network device sends the PDSCH to the terminal device, and the terminal device receives downlink data, namely, the PDSCH, based on indication information about the PDSCH in the DCI.

S230: The terminal device feeds back a HARQ for the PDSCH to the network device. Specifically, if the terminal device correctly receives the PDSCH, the terminal device feeds back an ACK to the network device; or if the terminal device fails to receive the PDSCH, the terminal device feeds back a NACK to the network device. The PUCCH resource used by the ACK or the NACK includes a slot, a PRB, a cyclic shift, and the like in which the PUCCH resource is located, and is also obtained from the preconfigured PUCCH resource set based on indication information of the DCI.

Before communicating with the network device, the terminal device needs to perform cell search to find a cell whose signal quality meets a condition, then initiate a random access process to the selected network device, and establish an RRC connection. Step S201 is a process in which the network device configures the PUCCH resource set for the terminal device in an RRC connection establishment process. After the RRC connection is established, the network device may indicate, in the configured PUCCH resource set, the terminal device to use one or more resources in the configured PUCCH resource set. For example, refer to steps S210 to S230.

In FIG. 2, a process in which the terminal device transmits UCI by using the PUCCH resource after the RRC connection is established is briefly described. However, before the RRC connection is established, the terminal device and the network device also need to communicate with each other. Before RRC establishment, when terminal devices with different capabilities coexist in a communication network, for example, when a reduced capability (reduced capability, RedCap) terminal device and a normal (normal) terminal device coexist, because a maximum channel bandwidth supported by the reduced capability terminal device is less than that supported by the normal terminal device, according to the current protocol specification, a PUCCH resource for the reduced capability terminal device is located in an initial uplink bandwidth part (bandwidth part, BWP) of the normal terminal device, and frequency hopping is performed. Frequency hopping of a PUCCH of the reduced capability terminal device can be performed only in a bandwidth supported by the reduced capability terminal device. As a result, system resource fragmentation is caused, and resource utilization is affected.

Therefore, when the terminal devices with different capabilities coexist in the communication network, how to avoid system resource fragmentation becomes an urgent problem to be resolved.

Before RRC establishment, for example, in a random access process, a terminal and a network need to exchange information for a plurality of times. Therefore, UCI transmission also needs to be performed in this process. The following further describes a technical problem in this application by using an example in which a PUCCH resource used by the terminal device to send a hybrid automatic repeat request (hybrid automatic repeat request, HARQ) for a contention resolution message (namely, the following Msg4) to the network device in the random access process.

Random access is a necessary process of establishing a radio link between a terminal device and a network. Only after random access is completed, data interoperations (normal DL/UL transmission) can be normally performed between the network device and the terminal device, and an RRC connection can be established. The terminal device may implement two basic functions through random access: 1. Establish uplink synchronization, to implement uplink synchronization with the network device. 2. Establish a unique terminal identifier, namely, a cell radio network temporary identifier (cell radio network temporary identifier, C-RNTI), to request the network device to allocate an uplink resource.

The random access process includes two modes: contention-based random access and non-contention-based random access. For a contention-based random access process, UE randomly selects a random access preamble (preamble) to initiate a random access process to a network device side. Therefore, if a plurality of UEs use a same preamble to initiate a random access process at a same moment, a conflict occurs, and an access failure may be caused. For a non-contention random access process, UE uses a specific access preamble provided by the network device during access, to avoid a conflict with another UE, thereby ensuring an access success rate.

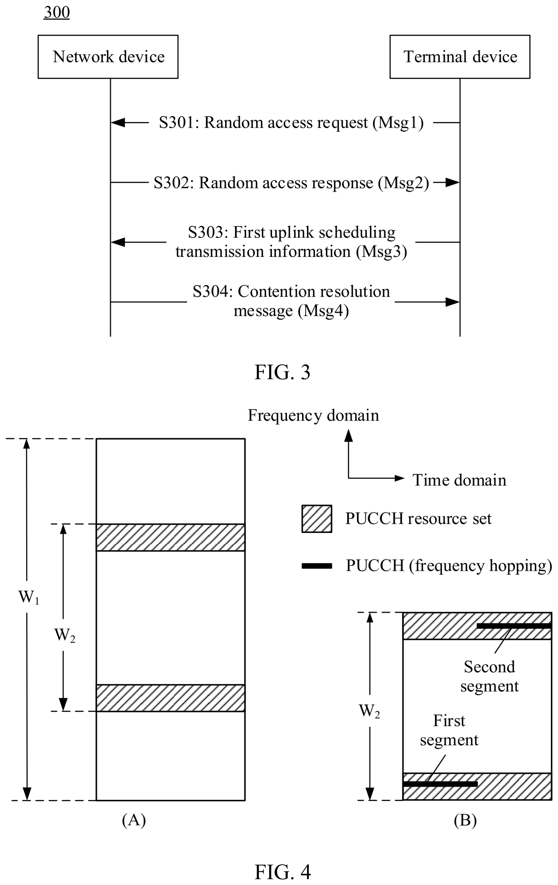

With reference to FIG. 3, a random access process 300 of a terminal device is first described by using a contention mode-based four-step random access process as an example.

After being powered on, the terminal device needs to first search surrounding cells. In a cell search process, the terminal device obtains system information (system information, SI) of a cell. The system information is carried in a master information block (master information block, MIB) or a system information block (system information block, SIB). The system information includes basic parameters of the cell. The terminal device needs to obtain the system information before initiating random access. After the terminal device synchronizes with the network device and obtains the system information of the cell, if the terminal device expects that the network device subsequently provides a service, the terminal device initiates a random access process.

S301: The terminal device initiates a random access request to the network device on a preconfigured random access channel occasion (RACH occasion, RO) resource, where the random access request includes a first random access preamble (preamble), or may be a message 1, namely, Msgl, of the random access process.

It should be noted that before S301, the random access process further includes: The terminal device receives a broadcast message of the network device, and randomly selecting a random access preamble from several random access preambles (preambles) in the broadcast message as the first random access preamble.

It should be understood that a plurality of terminal devices may send random access requests on a same RO resource, and these terminal devices may be distinguished based on different preambles. However, because a quantity of preambles in the broadcast message is limited, there is a possibility that a plurality of UEs select a same preamble. This problem may be resolved in step S304.

S302: The network device sends a random access response (random access response, RAR) (which may be referred to as a message 2, namely, Msg2) to the terminal device.

It should be noted that the random access response includes uplink grant (uplink grant, UL grant) information, and the uplink grant information indicates a resource for sending Msg3 by the terminal device.

S303: The terminal device sends a message 3 (which may be referred to as Msg3) to the network device based on a resource indicated by uplink scheduling information.

In the message 2, the network device indicates the terminal device to send the message 3. The terminal device sends the message 3 based on a scheduling indication of the message 2, where the message 3 includes specific information about the terminal device, for example, information such as a device identifier (identifier, ID) of the terminal device, and the terminal device sends an RRC connection request (RRC connection request) included in the message 3.

S304: The network device sends a contention resolution (contention resolution) message (which may be referred to as a new message 4, namely, Msg4) to the terminal device.

Based on the message 3, the network device may determine identity information of the terminal device, and send the message 4 to the terminal device.

Because preambles selected by different terminal devices may conflict with each other, a plurality of terminal devices may select a same preamble. In this step, the network device indicates a terminal device that successfully accesses the network.

In the random access process, both Msg2 and Msg4 are sent on a PDSCH. After S304, the terminal device performs HARQ feedback on the received Msg4 on a PUCCH resource.

With reference to FIG. 4 and Table 1, the following further describes the PUCCH resource used by the terminal device to feed back Msg4. FIG. 4 is a schematic diagram of a spectrum resource position of a terminal device according to this application.

As described above, the system information obtained by the terminal device during cell search includes the basic parameters of the cell. The basic parameters indicate information about an initial (initial) BWP, and the initial (initial) BWP is a part of a system bandwidth of the network device. In an initial access phase or in a low power consumption mode after access, the network device may schedule the terminal device only on the initial (initial) BWP. This can reduce power overheads of the terminal device, and reduce signal processing complexity. Specifically, an initial downlink (downlink, UL) BWP and an initial uplink (uplink, UL) BWP are separately configured by using the system information.

A frequency position and a bandwidth of the initial uplink BWP may be flexibly configured by the network device based on a running condition, where a width of the initial uplink BWP may be configured to be less than a size of the system bandwidth. As shown in (A) in FIG. 4, a size of a system bandwidth of a cell (cell) is $W_1$, and a bandwidth size of the initial uplink BWP configured by the network device for the terminal device is $W_2$, where $W_2 < W_1$. Alternatively, the width of the initial uplink BWP may be configured to be the same as the size of the system bandwidth, especially when the system bandwidth is relatively narrow. For example, as shown in (B) in FIG. 4, a size of the system bandwidth of the cell is $W_2$, and a bandwidth size of the initial uplink BWP configured by the network device for the terminal device is also $W_2$.

Before RRC establishment, a PUCCH resource set is configured on two sides of the bandwidth of the initial uplink BWP, as shown in (A) and (B) in FIG. 4. According to the protocol, the PUCCH resource set includes 16 PUCCH resources in total. Each PUCCH resource is divided into two segments in terms of time, and frequency hopping needs to be performed on a former segment and a next segment. In other words, the PUCCH resource used for frequency hopping is continuous in time domain and discontinuous in frequency. Shadow parts shown in (B) in FIG. 4 indicate that a former segment of a PUCCH resource is in a relatively low frequency part, a next segment of the PUCCH resource is in a relatively high frequency part, and frequency hopping is implemented. The former segment and the next segment may be respectively referred to as a first segment and a second segment of the PUCCH resource. A purpose of frequency hopping is to increase PUCCH frequency diversity gains and obtain more stable performance.

The network device sends configuration information of the initial uplink BWP in the system information, including a start frequency position and the bandwidth of the initial uplink BWP. After obtaining the system information, the terminal device may determine a frequency occupied by the initial uplink BWP. The configuration information of the initial uplink BWP further includes the foregoing PUCCH resource set configuration information. Specifically, the PUCCH resource set configuration information includes four bits. In addition, a PUCCH configuration information table has been specified in the protocol, as shown in Table 1. This table includes 16 rows. In each row, one piece of PUCCH resource set configuration information is defined, including a PUCCH format (format), a first symbol (first symbol), a quantity of symbols (number of symbols), a PRB offset (PRB offset), and a set of initial cyclic shift indexes (set of initial CS indexes). Four bits of the PUCCH resource set configuration information may indicate a row in the table. For example, "0010" of PUCCH resource set configuration information corresponds to a row "Index=2" in the table. The terminal device may learn that in the initial uplink BWP, a PUCCH format is set to 0, a first symbol is set to 12, a quantity of symbols is set to 2, a PRB offset is set to 3, and a set of initial cyclic shift indexes is set to {0, 4, 8}. Based on the information, the terminal device may determine a position of a PUCCH resource set, and determine respective positions of 16 PUCCH resources in this set. $N_{BWP}^{size}$ is a quantity of physical resource blocks RRBs included in the initial uplink BWP.

Table 1

| Index | PUCCH format | First symbol | Quantity of symbols | PRB offset $RB_{BWP}^{offset}$ | Set of initial cyclic shift indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size} / 4 \right\rfloor$ | {0, 3, 6, 9} |

It should be noted that the PUCCH resource for the terminal device may be indicated by the network device. For example, the network device may first indicate an index of a PUCCH resource set by using PUCCH resource set configuration information in a system information block (system information block, SIB) (for example, SIB1), for example, indicate a PUCCH resource set whose index is 0 in Table 1. Then, a specific PUCCH resource in the PUCCH resource set is further indicated by using PUCCH resource indication information. The PUCCH resource indication information includes four bits, and values are 0 to 15, each indicating one PUCCH resource index. A PUCCH resource index may be represented as $r_{PUCCH}$. For example, a PUCCH resource whose $r_{PUCCH}$ is 0 is indicated in a PUCCH resource set (including 16 resources) whose index is 0, PUCCH resource set configuration information is "0000", and PUCCH resource indication information is "0000".

In FIG. 3, if the network device needs the terminal device to feed back UCI, the network device indicates, in DCI, a PUCCH resource used for feeding back the UCI. For example, when sending Msg4 to the terminal device, the network device first sends DCI. The DCI not only indicates a time-frequency resource position and a transmission parameter of a PDSCH occupied by Msg4, but also includes PUCCH resource indication information, indicating a specific PUCCH resource used for HARQ transmission of Msg4. After receiving the PUCCH resource indication information, the terminal device determines $r_{PUCCH}$. For example, if the received PUCCH resource indication information is "0011", $r_{PUCCH}$ = 3. Further, the terminal device may determine, based on a row in Table 1 indicated by PUCCH resource set configuration information, a PUCCH resource used to feed back Msg4, specifically including a time domain position and a frequency position of the PUCCH, a used cyclic shift, and the like.

A number of a PRB corresponding to the first segment and a number of a PRB corresponding to the second segment of the PUCCH resource used by the terminal device to feed back Msg4 may be calculated in the following manner.

If $0 \le r_{PUCCH} < 8$, the number (which may be denoted as $X_1$) of the PRB corresponding to the first segment is:

$$X_1 = RB_{BWP}^{offset} + \left\lfloor \frac{r_{PUCCH}}{N_{CS}} \right\rfloor \quad (1)$$

The number (which may be denoted as $X_2$) of the PRB corresponding to the second segment is:

$$X_2 = N_{BWP}^{size} - 1 - RB_{BWP}^{offset} - \left\lfloor \frac{r_{PUCCH}}{N_{CS}} \right\rfloor \quad (2)$$

If $8 \le r_{PUCCH} < 16$, the number (which may be denoted as $X_1$) of the PRB corresponding to the first segment is:

$$X_1 = N_{BWP}^{size} - 1 - RB_{BWP}^{offset} - \left\lfloor \frac{r_{PUCCH} - 8}{N_{CS}} \right\rfloor \quad (3)$$

The number (which may be denoted as $X_2$) of the PRB corresponding to the second segment is:

$$X_2 = RB_{BWP}^{offset} + \left\lfloor \frac{r_{PUCCH} - 8}{N_{CS}} \right\rfloor \quad (4)$$

In the formulas, $X_1$ may alternatively be understood as a number of a PRB used by the first segment of the PUCCH resource, and $X_2$ may alternatively be understood as a number of a PRB used by the second segment of the PUCCH resource, where $X_1$ and $X_2$ are numbers of the PUCCH resource in the initial BWP, $RB_{BWP}^{offset}$ is denoted as a PRB offset specified in Table 1, $N_{CS}$ is a quantity of elements in a set of initial cyclic shift indexes in Table 1, $\left\lfloor \frac{r_{PUCCH}}{N_{CS}} \right\rfloor$ represents rounding down a result of $\frac{r_{PUCCH}}{N_{CS}}$, and $\left\lfloor \frac{r_{PUCCH} - 8}{N_{CS}} \right\rfloor$ represents rounding down a result of $\frac{r_{PUCCH} - 8}{N_{CS}}$.

For example, it is assumed that in system information, a width of an initial uplink BWP obtained by the terminal device is 100 PRBs, and PUCCH resource set configuration information indicates "Index=3". In this case, $N_{BWP}^{size} = 100$. Based on Table 1, the terminal device may obtain: a PRB offset $RB_{BWP}^{offset} = 0$, a set of initial cyclic shift indexes is {0, 6}, and $N_{CS} = 2$.

(1) If the network device sends Msg4 to the terminal device in the random access process, $r_{PUCCH} = 3$ is indicated in scheduling DCI. In this case, the terminal device may determine:

The number of the PRB corresponding to the first segment is $X_1 = RB_{BWP}^{offset} + \left\lfloor \frac{r_{PUCCH}}{N_{CS}} \right\rfloor = 0 + \left\lfloor \frac{3}{2} \right\rfloor = 1$, and the number of the PRB corresponding to the second segment is

$$X_2 = N_{BWP}^{size} - 1 - RB_{BWP}^{offset} - \left\lfloor \frac{r_{PUCCH}}{N_{CS}} \right\rfloor = 100 - 1 - 0 - \left\lfloor \frac{3}{2} \right\rfloor = 98$$

.

In this way, the PRB corresponding to the first segment and the PRB corresponding to the second segment of the PUCCH resource are respectively located on two sides of the bandwidth of the initial uplink BWP, thereby implementing frequency hopping.

(2) If the network device sends Msg4 to the terminal device in the random access process, $r_{PUCCH} = 10$ is indicated in scheduling DCI. In this case, the terminal device may determine:

The number of the PRB corresponding to the first segment is

$$X_1 = N_{BWP}^{size} - 1 - RB_{BWP}^{offset} - \left\lfloor \frac{r_{PUCCH} - 8}{N_{CS}} \right\rfloor = 100 - 1 - 0 - \left\lfloor \frac{10 - 8}{2} \right\rfloor = 98,$$

and

$$X_2 = RB_{BWP}^{offset} + \left\lfloor \frac{r_{PUCCH} - 8}{N_{CS}} \right\rfloor = 0 + \left\lfloor \frac{10 - 8}{2} \right\rfloor = 1.$$

the number of the PRB corresponding to the second segment is

In this way, the PRB corresponding to the first segment and the PRB corresponding to the second segment of the PUCCH resource are respectively located on two sides of the bandwidth of the initial uplink BWP, thereby implementing frequency hopping.

It can be learned that, if $0 \leq r_{PUCCH} < 8$, the first segment of the PUCCH resource is located at a relatively low frequency position, and the second segment is located at a relatively high frequency position. If $8 \leq r_{PUCCH} < 16$, the first segment of the PUCCH resource is located at a relatively high frequency position, and the second segment is located at a relatively low frequency position.

Frequency hopping of the PUCCH resource of the terminal device (which may be referred to as a terminal device #2 below) causes frequency resource isolation from a perspective of the network device, resulting in a resource fragmentation problem.

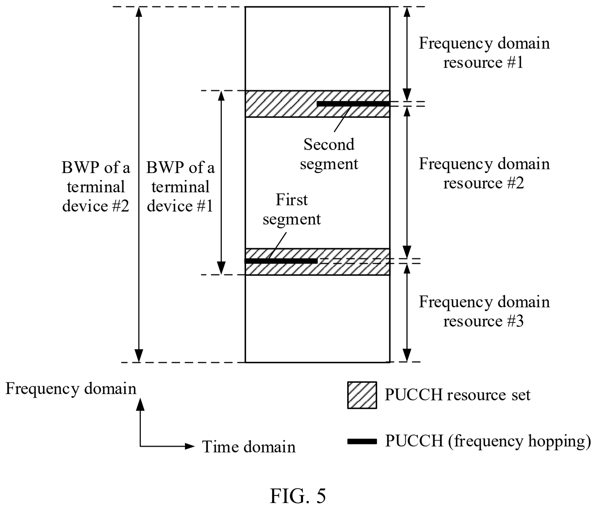

FIG. 5 shows resource positions of two terminals with different capabilities. A terminal device #1 may be a reduced capability terminal device, and a terminal device #2 may be a normal terminal device. A maximum channel bandwidth supported by the normal terminal device is greater than a maximum channel bandwidth supported by the reduced capability terminal device. If a first segment and a second segment of a PUCCH resource used by the reduced capability terminal device for a HARQ feedback of Msg4 are within a BWP range of the normal terminal device, a frequency domain resource that can be used by the normal terminal device is divided into three segments of resources, namely, a frequency domain resource #1, a frequency domain resource #2, and a frequency domain resource #3, and therefore, a resource fragmentation problem exists. When the network device allocates a resource to the normal terminal device, only the three scattered frequency domain resources can be used. In this way, scheduling of the network device is greatly limited, and resource allocation flexibility is reduced. In addition, for a normal terminal device, a relatively large continuous bandwidth cannot be configured. This affects a peak transmission rate of the normal terminal device.

It should be noted that terminal devices with different capabilities have different requirements for a mobile communication system. The foregoing normal terminal device and the reduced capability terminal device are two types of terminals that have different requirements for a communication capability. Compared with the normal terminal device, the reduced capability terminal device has a lower requirement for the communication capability. Therefore, a design specification of the reduced capability terminal device may be reduced. For example, a bandwidth supported by the reduced capability terminal device, a quantity of antennas supported by the reduced capability terminal device, and the like may be reduced, thereby reducing costs and device complexity. For example, a normal 5G mobile phone needs to support a bandwidth of 100 MHz and four receive antennas, but the reduced capability terminal device needs to support only a bandwidth of 20 MHz and one receive antenna.

For example, the reduced capability terminal device may be a wearable device (wearables), an industrial wireless sensor (industrial wireless sensor), and a video surveillance (video surveillance) device. In this application, in addition to the reduced capability terminal device, another NR terminal device may be referred to as a normal (normal) terminal device or a legacy (legacy) terminal device, for example, an enhanced mobile broadband (enhanced mobile broadband, eMBB) terminal device or an ultra-reliable low-latency communication (Ultra-reliable low-latency communication, URLLC) terminal device. The reduced capability terminal device can meet requirements of many communication scenarios, and complexity and costs are greatly reduced. Therefore, there are wide requirements in some industry fields.

It should be noted that in this application, regardless of a specific type of a terminal device, provided that channel bandwidths supported by the two terminal devices are different, when the two terminal devices coexist in a communication network, a terminal device that supports a relatively small maximum channel bandwidth may cause fragmentation of a frequency domain resource of a terminal device that supports a relatively large maximum channel bandwidth.

In view of this, this application provides a communication method, to re-determine a PUCCH resource used by the terminal device #1, and avoid resource fragmentation of the terminal device #2.

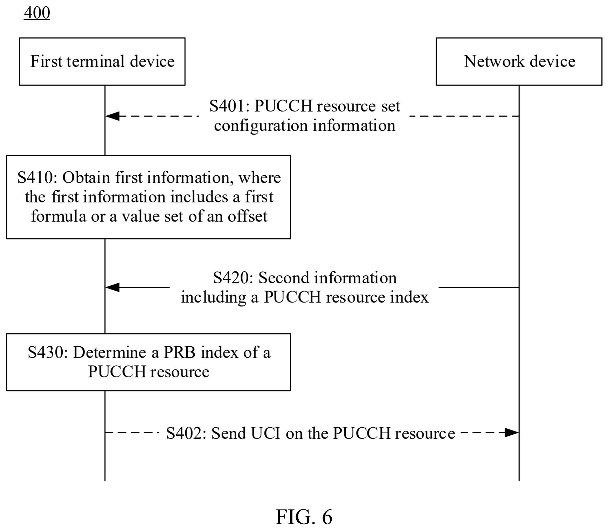

With reference to FIG. 6, the following describes in detail a communication method 400 in this application. It should be noted that a first terminal device in the following method 400 is the terminal device that supports a relatively small maximum channel bandwidth.

S410: The first terminal device obtains first information, where the first information includes a first formula or a value set of an offset, and the first formula or the value set of the offset is used to determine a physical resource block PRB index.

The first formula or the value set of the offset obtained by the first terminal device is used to determine the PRB index. The first formula may also be understood as a calculation basis, a calculation method, a calculation rule, a calculation law, a determining basis, a determining method, a determining rule, or a function relationship. In other words, the first formula provides a mathematical basis for determining the PRB index, and the first formula may indicate a relationship between a PUCCH resource index and the PRB index. The value set of the offset may also be understood as a value range of the offset or a column in which the offset is located in a PUCCH resource set configuration information table, or may also be understood as a correspondence between PUCCH resource set indication information and the offset. The offset may also be referred to as an offset value, an offset parameter, a quantity of offset PRBs, or the like, indicating a PRB offset. Specifically, the offset is a quantity of PRBs offset by a PRB in which the first PUCCH resource in the PUCCH resource set is located relative to a lower boundary of the BWP (that is, a PRB whose index is 0 in the BWP). In this application, the offset has a same meaning as that indicated by the fifth column in Table 1. The PRB index may also be referred to as a number of a PRB.

By way of example, and not limitation, the first terminal device may obtain the first information from a network device, or may obtain the first information according to a protocol definition. That the first information includes a first formula or a value set of an offset means that the first information is the first formula, or the first information is the value set of the offset.

S420: The network device sends second information to the first terminal device, and the first terminal device receives the second information, where the second information includes a PUCCH resource index.

When the network device needs the terminal device to transmit UCI, the network device may send, to the terminal device, the second information, namely, an index of a PUCCU resource used for transmitting the UCI. For example, the network device may carry the second information in DCI. The PUCCH resource index may also be referred to as PUCCH resource indication information, and indicates an index of the PUCCH resource in a PUCCH resource set.

In an existing protocol, the PUCCH resource set includes 16 PUCCH resources. Therefore, the PUCCH resource index includes four bits, and a value is any integer from 0 to 15, indicating any one of the 16 PUCCH resources.

Optionally, more or fewer bits may also be used for the PUCCH resource index.

S430: The first terminal device determines a PRB index of the PUCCH resource based on the first information and the PUCCH resource index.

If the first information is the first formula, the first formula includes a parameter of the PUCCH resource index. Therefore, the first terminal device may determine a calculation basis of the PRB based on the first formula, and then determine the PRB index of the PUCCH resource based on the PUCCH resource index.

It should be understood that the first formula may further include other parameters in addition to the PUCCH resource index. Before obtaining the first formula, the first terminal device may first obtain these parameters. Therefore, when obtaining the first formula, the first terminal device may obtain the correspondence between the PUCCH resource index and the PRB index, and further can determine the PRB index based on the PUCCH resource index.

If the first information is the value set of the offset, the first terminal device may first determine a first PRB offset based on the obtained PUCCH resource set configuration information, where the value set of the offset includes the first PRB offset, and then the first terminal device determines the PRB index of the PUCCH resource based on a preset second formula, the first PRB offset, and the PUCCH resource index. The PUCCH resource set configuration information may indicate a PUCCH resource set, where the first PRB is information in the PUCCH resource set.

It should be understood that the second formula is also used to determine the PRB index. The second formula may be indicated by the network device, or may be defined in a protocol. The second formula may be the same as or different from the first formula. The second formula includes at least two parameters: the PUCCH resource index and the offset.

According to the solutions of this application, the first terminal device obtains the first formula or the value set of the offset, and the first terminal device may determine the PRB index of the PUCCH resource based on the first formula or the value set of the offset and the received PUCCH resource index. The PUCCH resource may be used by the first terminal device to transmit uplink control information. The determined PUCCH resource is located on one side of the initial uplink BWP of the first terminal device, and a PUCCH resource set in which the PUCCH resource is located is adjacent to a PUCCH resource set of another terminal device. This can avoid spectrum resource fragmentation of the another terminal device, and improve resource utilization.

In an implementation, the method 400 further includes S401: The network device sends the PUCCH resource set configuration information to the first terminal device, where the PUCCH resource set configuration information is used to determine the PRB index of the PUCCH resource.

The PUCCH resource set configuration information may be an index. The network device sends the configuration information to the first terminal device, and the first terminal device determines information about a PUCCH resource set from a PUCCH configuration information table based on the configuration information. In each row of the PUCCH configuration information table, one piece of PUCCH resource set configuration information is defined, including but not limited to information such as a PUCCH format (format), a first symbol (first symbol), a quantity of symbols (number of symbols), a PRB offset (PRB offset), and a set of initial cyclic shift indexes (set of initial CS indexes). The PUCCH configuration information table may be in a format defined in a current protocol. For example, as shown in Table 1, the PUCCH configuration information table 1 includes 16 rows and 6 columns, and each row indicates a PUCCH resource set. In this case, PUCCH resource set indication information may include four bits, and values are from 0 to 15, each indicating a PUCCH resource set. Optionally, the PUCCH configuration information table may alternatively be a newly specified table, and includes more information. For example, as shown in Table 2, a PUCCH configuration information table 2 includes 16 rows and 7 columns. Based on Table 1, a column of PRB offsets, namely, PRB offsets 2, is added to Table 2. When a PRB offset parameter needs to be used, a column of the PRB offset parameter may be used as a value set of an offset, where $N_{BWP}^{size}$ is a quantity of physical resource blocks RRBs included in a first initial uplink BWP, and the first initial uplink BWP is used by the first terminal device to perform uplink transmission.

**Table 2**

| Index | PUCCH format | First symbol | Quantity of symbols | PRB offset 1 $RB_{BWP}^{offset}$ | PRB offset 2 $RB_{BWP}^{offset}$ | Set of initial cyclic shift indexes |
|---|---|---|---|---|---|---|
| 0 | 0 | 12 | 2 | 0 | $N_{BWP}^{size}-8$ | {0, 3} |
| 1 | 0 | 12 | 2 | 0 | $N_{BWP}^{size}-6$ | {0, 4, 8} |
| 2 | 0 | 12 | 2 | 3 | $N_{BWP}^{size}-9$ | {0, 4, 8} |
| 3 | 1 | 10 | 4 | 0 | $N_{BWP}^{size}-8$ | {0, 6} |
| 4 | 1 | 10 | 4 | 0 | $N_{BWP}^{size}-4$ | {0, 3, 6, 9} |
| 5 | 1 | 10 | 4 | 2 | $N_{BWP}^{size}-6$ | {0, 3, 6, 9} |
| 6 | 1 | 10 | 4 | 4 | $N_{BWP}^{size}-8$ | {0, 3, 6, 9} |
| 7 | 1 | 4 | 10 | 0 | $N_{BWP}^{size}-8$ | {0, 6} |
| 8 | 1 | 4 | 10 | 0 | $N_{BWP}^{size}-4$ | {0, 3, 6, 9} |
| 9 | 1 | 4 | 10 | 2 | $N_{BWP}^{size}-6$ | {0, 3, 6, 9} |
| 10 | 1 | 4 | 10 | 4 | $N_{BWP}^{size}-8$ | {0, 3, 6, 9} |
| 11 | 1 | 0 | 14 | 0 | $N_{BWP}^{size}-8$ | {0, 6} |
| 12 | 1 | 0 | 14 | 0 | $N_{BWP}^{size}-4$ | {0, 3, 6, 9} |
| 13 | 1 | 0 | 14 | 2 | $N_{BWP}^{size}-6$ | {0, 3, 6, 9} |

(continued)

| Index | PUCCH format | First symbol | Quantity of symbols | PRB offset 1 $RB_{BWP}^{offset}$ | PRB offset 2 $RB_{BWP}^{offset}$ | Set of initial cyclic shift indexes |
|---|---|---|---|---|---|---|
| 14 | 1 | 0 | 14 | 4 | $N_{BWP}^{size} - 8$ | {0, 3, 6, 9} |
| 15 | 1 | 0 | 14 | $\left\lfloor N_{BWP}^{size} / 4 \right\rfloor$ | $N_{BWP}^{size} - 4 - \left\lfloor N_{BWP}^{size} / 4 \right\rfloor$ | {0, 3, 6, 9} |

In a possible implementation, the method 400 further includes: The first terminal device receives first indication information from the network device, where the first indication information indicates the first formula or the value set of the offset. That the first terminal device obtains first information includes: determining the first information based on the first indication information.

In an implementation, the first indication information indicates the first formula.

The protocol may define a formula #1 and a formula #2 that are used by the first terminal device to determine the PRB index, and specify that the network device indicates the first terminal device to determine the PRB index by using the formula #1 or the formula #2.

Specifically, the network device may determine a frequency position relationship between the PUCCH resource set and the first initial uplink BWP. The PUCCH resource set is a PUCCH resource set configured by the network device for the first terminal device, and the first initial uplink BWP is an initial uplink BWP configured by the network device for the first terminal device. When the PUCCH resource set is located at an upper edge of the first initial uplink BWP, or when the PUCCH resource set is located at a relatively high frequency position of the first initial uplink BWP, the network device may indicate that the first formula is Formula (5):

$$X = N_{BWP}^{size} - 1 - RB_{BWP}^{offset} - \left\lfloor \frac{r_{PUCCH}}{N_{CS}} \right\rfloor \quad (5)$$

When the PUCCH resource set is located at a lower edge of the first initial uplink BWP, or when the PUCCH resource set is located at a relatively low frequency position of the first initial uplink BWP, the network device may indicate that the first formula is Formula (6):

$$X = RB_{BWP}^{offset} + \left\lfloor \frac{r_{PUCCH}}{N_{CS}} \right\rfloor \quad (6)$$

In Formula (5) and Formula (6), $X$ is the PRB index of the PUCCH resource, $N_{BWP}^{size}$ is a quantity of PRBs included in a bandwidth of the first initial uplink BWP, $RB_{BWP}^{offset}$ is the first PRB offset of the PUCCH resource, $r_{PUCCH}$ is the PUCCH resource index, $N_{CS}$ is a quantity of elements in the set of initial cyclic shift

indexes, and $\left\lfloor \frac{r_{PUCCH}}{N_{CS}} \right\rfloor$ indicates rounding down a result of $\frac{r_{PUCCH}}{N_{CS}}$.

It should be noted that the determined PUCCH resource associated with the PRB index is used by the first terminal device to transmit the UCI. In other words, the first initial uplink BWP includes the PUCCH resource associated with the PRB index. The information about the PUCCH resource set indicated by the PUCCH resource set configuration information includes the first PRB offset and the set of initial cyclic shift indexes.

The first indication information may be one bit, and values 0 and 1 respectively indicate Formula (5) and Formula (6). The first terminal device may determine the first formula based on the first indication information.

The following uses an example for description. It should be understood that an example in which the PUCCH configuration table is Table 1 is used herein for description.

(1) If the network device determines that the PUCCH set of the first terminal device is disposed at the upper edge of the initial uplink BWP, the first formula indicated by the first indication information is

$$X = N_{BWP}^{size} - 1 - RB_{BWP}^{offset} - \left\lfloor \frac{r_{PUCCH}}{N_{CS}} \right\rfloor .$$

In addition, in the system information, the network device indicates, to the first terminal device, that the PUCCH resource set configuration information is "0011", corresponding to a row in which an index 3 is located in Table 1. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH}$ = 3 is indicated in scheduling DCI. In this case, the first terminal device may determine a number of a PRB corresponding to the PUCCH resource used to feed back Msg4, that is, a number of the PUCCH resource in the first initial uplink BWP is:

$$X = N_{BWP}^{size} - 1 - RB_{BWP}^{offset} - \left\lfloor \frac{r_{PUCCH}}{N_{CS}} \right\rfloor = 100 - 1 - 0 - \left\lfloor \frac{3}{2} \right\rfloor = 98 .$$

(2) If the network device determines that the PUCCH set of the first terminal device is disposed at the lower edge

$$X = RB_{BWP}^{offset} + \left\lfloor \frac{r_{PUCCH}}{N_{CS}} \right\rfloor$$

of the initial uplink BWP, the first formula indicated by the first indication information is                     .

In addition, in the system information, the network device indicates, to the first terminal device, that the PUCCH resource set configuration information is "0011", corresponding to a row in which an index 3 is located in Table 1. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH}$ = 3 is indicated in scheduling DCI. In this case, the first terminal device may determine a number of a PRB corresponding to the PUCCH resource used to feed back Msg4, that is, a number of the PUCCH resource in the first initial uplink BWP is:

$$X = RB_{BWP}^{offset} + \left\lfloor \frac{r_{PUCCH}}{N_{CS}} \right\rfloor = 0 + \left\lfloor \frac{3}{2} \right\rfloor = 1 .$$

Therefore, in this application, the first terminal device may determine, based on an indication of the network device, to use Formula (5) or Formula (6) to determine the PRB index of the PUCCH resource. In other words, the PUCCH resource can be located at the upper edge or the lower edge of the first initial BWP, and frequency hopping is not performed, thereby avoiding spectrum resource fragmentation of another terminal device and improving resource utilization.

In addition, in this embodiment of this application, a larger continuous bandwidth can be configured for a normal terminal device, to improve a transmission rate of the terminal device.

In addition, processing complexity of the terminal device can be reduced by using the indication of the network device.

In an implementation, the first indication information indicates the value set of the offset.

A protocol may define a PUCCH configuration information table different from Table 1. The PUCC configuration information table includes two columns of PRB offsets, which are respectively denoted as a PRB offset 1 and a PRB offset 2, or may be referred to as a first value set of the PRB offset of the PUCCH resource, or a second value set of the PRB offset of the PUCCH resource. It is specified that the network device indicates the first terminal device to use the first value set or the second value set to determine the PRB index.

Specifically, the network device may determine a frequency position relationship between the PUCCH resource set and the first initial uplink BWP. The PUCCH resource set is a PUCCH resource set configured by the network device for the first terminal device, and the first initial uplink BWP is an initial uplink BWP configured by the network device for the first terminal device. When the PUCCH resource set is located at the upper edge of the first initial uplink BWP, or when the PUCCH resource set is located at the relatively high-frequency position of the first initial uplink BWP, the network device may indicate that the value set of the offset is the second value set of the PRB offset of the PUCCH resource, where a value of the PRB offset in the second value set is $N_{BWP}^{size} - Y$, $N_{BWP}^{size}$ is a quantity of PRBs included in a bandwidth of the first initial uplink BWP, and $Y$ is a positive integer.

When the PUCCH resource set is located at the lower edge of the first initial uplink BWP, or when the PUCCH resource set is located at the relatively low frequency position of the first initial uplink BWP, the network device may indicate that the value set of the offset is the first value set of the PRB offset of the PUCCH resource.

For example, if the defined PUCCH configuration information table is Table 2, the second value set may be the sixth column, namely, the PRB offset 2, in Table 2, and the first value set is the fifth column, namely, the PRB offset 1, in Table 2. In other words, the network device indicates that the PRB offset of the PUCCH resource is the PRB offset 2, or the network device indicates that the PRB offset of the PUCCH resource is the PRB offset 1. That is, if an existing configuration information table is extended, the value set of the offset includes 16 elements.

The information about the PUCCH resource set indicated by the PUCCH resource set configuration information includes the first PRB offset, and the first PRB offset belongs to the value set of the offset. In other words, the first PRB offset belongs to the first value set or the second value set.

It should be understood that, the PUCCH resource set configuration information and the first indication information jointly determine the first PRB offset. In the PUCCH configuration information table, the first indication information indicates a column of information that is used to determine the first PRB offset, and the PUCCH resource set configuration information indicates a row of information that is used to determine the first PRB offset.

Further, if the first indication information indicates the value set of the offset, the first terminal device may determine the PRB index of the PUCCH resource according to a preset second formula. The second formula is:

$$X = RB_{BWP}^{offset} + \left\lfloor \frac{r_{PUCCH}}{N_{CS}} \right\rfloor \quad (7)$$

In Formula (7), $X$ is the PRB index of the PUCCH resource, $RB_{BWP}^{offset}$ is the first PRB offset of the PUCCH resource, the first PRB offset is determined based on the PUCCH resource set configuration information and the first indication information, $r_{PUCCH}$ is the PUCCH resource index, $N_{CS}$ is a quantity of elements in the set of initial cyclic shift indexes, and $\left\lfloor \frac{r_{PUCCH}}{N_{CS}} \right\rfloor$ represents rounding down a result of $\frac{r_{PUCCH}}{N_{CS}}$.

It should be noted that the determined PUCCH resource associated with the PRB index is used by the first terminal device to transmit the UCI. In other words, the first initial uplink BWP includes the PUCCH resource associated with the PRB index. The information about the PUCCH resource set indicated by the PUCCH resource set configuration information includes the first PRB offset and the set of initial cyclic shift indexes.

The first indication information may be one bit, and values 0 and 1 respectively indicate the first value set and the second value set. The first terminal device may determine the value set of the offset based on the first indication information.

The following uses an example for description. It should be understood that an example in which the PUCCH configuration table is Table 2 is used herein for description.

(1) If the network device determines that the PUCCH set of the first terminal device is disposed at the upper edge of the initial uplink BWP, the value set of the offset indicated by the first indication information is the PRB offset 2.

In addition, in the system information, the network device indicates, to the first terminal device, that the PUCCH resource set configuration information is "0011", corresponding to a row in which an index 3 is located in Table 2. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to $N_{BWP}^{size} - 8$, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH} = 3$ is indicated in scheduling DCI. In this case, the terminal device may determine a number of a PRB corresponding to the PUCCH resource used to feed back Msg4, that is, a number of the PUCCH resource in the first initial uplink BWP is:

$$X = RB_{BWP}^{offset} + \left\lfloor \frac{r_{PUCCH}}{N_{CS}} \right\rfloor = N_{BWP}^{size} - 8 + \left\lfloor \frac{r_{PUCCH}}{N_{CS}} \right\rfloor = 100 - 8 + \left\lfloor \frac{3}{2} \right\rfloor = 93.$$

(2) If the network device determines that the PUCCH set of the first terminal device is disposed at the lower edge of the initial uplink BWP, the value set of the offset indicated by the first indication information is the PRB offset 1.

In addition, in the system information, the network device indicates, to the first terminal device, that the PUCCH resource set configuration information is "0011", corresponding to a row in which an index 3 is located in Table 2. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH} = 3$ is indicated in scheduling DCI. In this case, the terminal device may determine a number of a PRB corresponding to the PUCCH resource used to feed back Msg4, that is, a number of the PUCCH resource in the first initial uplink BWP is:

$$X = RB_{BWP}^{offset} + \left\lfloor \frac{r_{PUCCH}}{N_{CS}} \right\rfloor = 0 + \left\lfloor \frac{3}{2} \right\rfloor = 1.$$

Therefore, in this application, the first terminal device may determine, based on an indication of the network device, to use the first value set or the second value set to determine the PRB index of the PUCCH resource. In other words, the PUCCH resource can be located at the upper edge or the lower edge of the first initial BWP, and frequency hopping is not performed, thereby avoiding spectrum resource fragmentation of another terminal device and improving resource utilization.

In addition, in this embodiment of this application, a larger continuous bandwidth can be configured for a normal terminal device, to improve a transmission rate of the terminal device.

In addition, processing complexity of the terminal device can be reduced by using the indication of the network device.

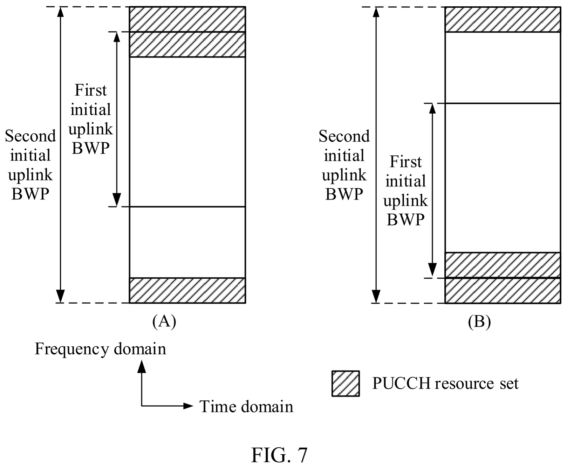

It should be understood that before sending the first indication information, the network device first configures the initial uplink BWP for the first terminal device, and configures the PUCCH resource set in the initial uplink BWP. The initial uplink BWP configured for the first terminal device may be referred to as the first initial uplink BWP. The PUCCH resource set of the first terminal device may be located at the upper edge of the first initial uplink BWP, and in this case, the first initial uplink BWP is closer to the upper edge of the second initial uplink BWP, as shown in (A) in FIG. 7. Alternatively, the PUCCH resource set of the first terminal device may be located at the lower edge of the first initial uplink BWP, and in this case, the first initial uplink BWP is closer to the lower edge of the second initial uplink BWP, as shown in (B) in FIG. 7. The second initial uplink BWP is used by a second terminal device to perform uplink transmission, and a maximum channel bandwidth supported by the second terminal device is greater than a maximum channel bandwidth supported by the first terminal device. When terminal devices with different capabilities coexist in a communication network, the PUCCH resource set of the first terminal device is disposed at the upper edge or the lower edge of the first initial uplink BWP. This can avoid spectrum resource fragmentation of another terminal device and improve resource utilization.

It should be further understood that, in this application, the PUCCH resource set of the first terminal device is located at the upper edge of the first initial uplink BWP, that is, the PUCCH resource set of the first terminal device overlaps an end frequency position of the first initial uplink BWP. The PUCCH resource set of the first terminal device is located at the lower edge of the first initial uplink BWP, that is, the PUCCH resource set of the first terminal device overlaps a start frequency position of the first initial uplink BWP.

In some other embodiments, the method in this application may also be used when the network device determines that the PUCCH resource set of the first terminal device is located at the relatively high or low frequency position in the first initial uplink BWP. Specifically, when the PUCCH resource set of the first terminal device is located at a relatively high frequency position of the first initial uplink bandwidth part BWP, the network device may further determine that the first formula is $X = N_{BWP}^{size} - 1 - RB_{BWP}^{offset} - \left\lfloor \frac{r_{PUCCH}}{N_{CS}} \right\rfloor$ ; or when the PUCCH resource set of the first terminal device is located at a relatively low frequency position of the first initial uplink BWP, the network device determines that the

$$X = RB_{BWP}^{offset} + \left\lceil \frac{r_{PUCCH}}{N_{CS}} \right\rceil$$

first formula is . Alternatively, when the PUCCH resource set of the first terminal device is located at a relatively high frequency position of the first initial uplink bandwidth part BWP, the network device may further determine that the value set of the offset is the second value set of the PRB offset of the PUCCH resource; or when the PUCCH resource set of the first terminal device is located at a relatively low frequency position of the first initial uplink BWP, the network device determines that the value set of the offset is the first value set of the PRB offset of the PUCCH resource.

It should be understood that, that the PUCCH resource set of the first terminal device is located at a relatively high frequency position of the first initial uplink BWP may be understood as that a center frequency position of the PUCCH resource set of the first terminal device is higher than a center frequency position of the first initial uplink BWP; or may be understood as that an end frequency position of the PUCCH resource set of the first terminal device is lower than an end frequency position of the first initial uplink BWP, and that a start frequency position of the PUCCH resource set of the first terminal device is higher than a center frequency position of the first initial uplink BWP. That the PUCCH resource set of the first terminal device is located at a relatively low frequency position of the first initial uplink BWP may be understood as that the center frequency position of the PUCCH resource set of the first terminal device is lower than the center frequency position of the first initial uplink BWP; or may be understood as that the start frequency position of the PUCCH resource set of the first terminal device is higher than the start frequency position of the first initial uplink BWP, and the end frequency position of the PUCCH resource set of the first terminal device is lower than the center frequency position of the first initial uplink BWP.

In a possible implementation, the PUCCH resource set configuration information and the first indication information may be sent in same information. For example, both the PUCCH resource set configuration information and the first indication information are carried in third information, and the third information is SIB1, downlink control information DCI for scheduling SIB1, or a master information block MIB.

Optionally, the third information may be other SIB information or other system information, for example, SIB2 or SIB3.

Optionally, the third information may further include configuration information of the first initial uplink BWP that indicates information such as a bandwidth size, a frequency position, and a time domain position of the first initial uplink BWP.

Optionally, the PUCCH resource set configuration information and the first indication information may be sent in different information. For example, the PUCCH resource set configuration information is carried in SIB1, and the first indication information is carried in a MIB.

It should be noted that a sending sequence of the first indication information and the PUCCH resource set configuration information is not limited in this application.

In an implementation, the method further includes: The network device sends second indication information to the first terminal device, where the second indication information indicates that no frequency hopping is performed on the PUCCH resource. In other words, the network device may indicate the first terminal device to disable frequency hopping of the PUCCH resource. In this way, the PUCCH resource of the first terminal device may be close to the upper edge or the lower edge of the initial uplink BWP, to avoid resource fragmentation and improve resource utilization.

Optionally, the second indication information may be indicated by using one bit, and values 0 and 1 respectively indicate that frequency hopping is not disabled and that frequency hopping is disabled. The first terminal device may determine, based on the second indication information, whether there is frequency hopping on the PUCCH resource.

Optionally, the first indication information may also be carried in the third information.

In a possible implementation, that the first terminal device obtains first information includes: The first terminal device determines the first information based on a value relationship between a center frequency of a first initial uplink bandwidth part BWP and a center frequency of a second initial uplink BWP, where the first initial uplink BWP is used by the first terminal device to perform uplink transmission, the second initial uplink BWP is used by the second terminal device to perform uplink transmission, and a maximum channel bandwidth supported by the second terminal device is greater than a maximum channel bandwidth supported by the first terminal device.

In an implementation, the first information includes the first formula, and that the first terminal device obtains first information includes: The first terminal device determines the first formula.

The protocol may define a formula #1 and a formula #2 that are used by the first terminal device to determine the PRB index, and specify that the first terminal device determines, based on the value relationship between the center frequency of the first initial uplink BWP and the center frequency of the second initial uplink BWP, to use the formula #1 or the formula #2 to determine the PRB index.

Specifically, when the center frequency of the first initial uplink BWP is greater than the center frequency of the second initial uplink BWP, the first terminal device determines that the first formula is Formula (8):

$$X = N_{BWP}^{size} - 1 - RB_{BWP}^{offset} - \left\lfloor \frac{r_{PUCCH}}{N_{CS}} \right\rfloor \quad (8)$$

When it is determined that the center frequency of the first initial uplink BWP is less than the center frequency of the second initial uplink BWP, the first terminal device determines that the first formula is Formula (9):

$$X = RB_{BWP}^{offset} + \left\lfloor \frac{r_{PUCCH}}{N_{CS}} \right\rfloor \quad (9)$$

In Formula (8) and Formula (9), $X$ is the PRB index of the PUCCH resource, $N_{BWP}^{size}$ is a quantity of PRBs included in a bandwidth of the first initial uplink BWP, $RB_{BWP}^{offset}$ is the first PRB offset of the PUCCH resource, $r_{PUCCH}$ is the PUCCH resource index, $N_{CS}$ is a quantity of elements in the set of initial cyclic shift indexes, and $\left\lfloor \frac{r_{PUCCH}}{N_{CS}} \right\rfloor$ indicates rounding down a result of $\frac{r_{PUCCH}}{N_{CS}}$.

It should be noted that the determined PUCCH resource associated with the PRB index is used by the first terminal device to transmit the UCI. In other words, the first initial uplink BWP includes the PUCCH resource associated with the PRB index. The information about the PUCCH resource set indicated by the PUCCH resource set configuration information includes the first PRB offset and the set of initial cyclic shift indexes.

The following uses an example for description. It should be understood that an example in which the PUCCH configuration table is Table 1 is used herein for description.

(1) In the system information, the network device indicates, to the first terminal device, that PUCCH frequency hopping is disabled, and separately indicates: A start position of the first initial uplink BWP is a PRB of a number of 100, where the number of PRB herein is a number of PRB in a system bandwidth, and the bandwidth is 100 PRBs, that is, the bandwidth of the first initial uplink BWP includes 100 PRBs; and a start position of the second initial uplink BWP is a PRB of a number of 0, where the number of PRB herein is a number of PRB in the system bandwidth, and the bandwidth is 200 PRBs, that is, the bandwidth of the second initial uplink BWP includes 200 PRBs. The first terminal device determines that the center frequency of the first initial uplink BWP is a PRB of a number of 150, and the center frequency of the second initial uplink BWP is a PRB of a number of 100. Therefore, the first terminal device determines that the center frequency of the first initial uplink BWP is greater than the center frequency of the second initial uplink BWP, and determines that the first formula is $X = N_{BWP}^{size} - 1 - RB_{BWP}^{offset} - \left\lfloor \frac{r_{PUCCH}}{N_{CS}} \right\rfloor$.

In addition, in the system information, the network device indicates, to the first terminal device, that the PUCCH resource set configuration information is "0011", corresponding to a row in which an index 3 is located in Table 1. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH}$ = 3 is indicated in scheduling DCI. In this case, the first terminal device may determine a number of a PRB corresponding to the PUCCH resource used to feed back Msg4, that is, a number of the PUCCH resource in the first initial uplink BWP is:

$$X = N_{BWP}^{size} - 1 - RB_{BWP}^{offset} - \left\lfloor \frac{r_{PUCCH}}{N_{CS}} \right\rfloor = 100 - 1 - 0 - \left\lfloor \frac{3}{2} \right\rfloor = 98.$$

(2) In the system information, the network device indicates, to the first terminal device, that PUCCH frequency hopping is disabled, and separately indicates: A start position of the first initial uplink BWP is a PRB of a number of 0, where the number of PRB herein is a number of PRB in a system bandwidth, and the bandwidth is 100 PRBs, that is, the bandwidth of the first initial uplink BWP includes 100 PRBs; and a start position of the second initial uplink BWP is a PRB of a number of 0, where the number of PRB herein is a number of PRB in the system bandwidth, and the bandwidth is 200 PRBs, that is, the bandwidth of the second initial uplink BWP includes 200 PRBs. The first terminal device determines that the center frequency of the first initial uplink BWP is a PRB of a number of 50, and the center frequency of the second initial uplink BWP is a PRB of a number of 100. Therefore, the first terminal device determines that the center frequency of the first initial uplink BWP is less than the center frequency of the second initial uplink BWP, and determines that the first formula is

$$X = RB_{BWP}^{offset} + \left\lfloor \frac{r_{PUCCH}}{N_{CS}} \right\rfloor.$$

In addition, in the system information, the network device indicates that the PUCCH resource set configuration information is "0011", corresponding to a row in which an index 3 is located in Table 1. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH} = 3$ is indicated in scheduling DCI. In this case, the first terminal device may determine a number of a PRB corresponding to the PUCCH resource used to feed back Msg4, that is, a number of the PUCCH resource in the first initial uplink BWP is:

$$X = RB_{BWP}^{offset} + \left\lfloor \frac{r_{PUCCH}}{N_{CS}} \right\rfloor = 0 + \left\lfloor \frac{3}{2} \right\rfloor = 1.$$

Therefore, in this application, the first terminal device may determine, based on the value relationship between the center frequency of the first initial uplink BWP and the center frequency of the second initial uplink BWP, to use Formula (8) or Formula (9) to determine the PRB index of the PUCCH resource. In other words, the PUCCH resource can be located at the upper edge or the lower edge of the first initial BWP, and frequency hopping is not performed, thereby avoiding spectrum resource fragmentation of another terminal device and improving resource utilization.

In addition, in this embodiment of this application, a larger continuous bandwidth can be configured for a normal terminal device, to improve a transmission rate of the terminal device.

In addition, no additional indication is required in this manner, and signaling overheads can be reduced.

In an implementation, the first information includes the value set of the offset, and that the first terminal device determines first information includes: The first terminal device determines the value set of the offset.

A protocol may define a PUCCH configuration information table different from Table 1. The PUCC configuration information table includes two columns of PRB offsets, which are respectively denoted as a PRB offset 1 and a PRB offset 2, or may be referred to as a first value set of the PRB offset of the PUCCH resource, or a second value set of the PRB offset of the PUCCH resource. It is specified that the network device indicates the first terminal device to use the first value set or the second value set to determine the PRB index.

Specifically, when the center frequency of the first initial uplink BWP is greater than the center frequency of the second initial uplink BWP, the first terminal device determines that the value set of the offset is the second value set of the PRB offset of the PUCCH resource, where a value of the PRB offset in the second value set is $N_{BWP}^{size} - Y$, $N_{BWP}^{size}$ is a quantity of PRBs included in a bandwidth of the first initial uplink BWP, and $Y$ is a positive integer.

When it is determined that the center frequency of the first initial uplink BWP is less than the center frequency of the second initial uplink BWP, the first terminal device determines that the value set of the offset is the first value set of the PRB offset of the PUCCH resource.

For example, if the defined PUCCH configuration information table is Table 2, the second value set may be the sixth column, namely, the PRB offset 2, in Table 2, and the first value set is the fifth column, namely, the PRB offset 1, in Table 2. In other words, the first terminal device determines that the PRB offset of the PUCCH resource is the PRB offset 2, or the first terminal device may determine that the PRB offset of the PUCCH resource is the PRB offset 1. That is, if an existing configuration information table is extended, the value set of the offset includes 16 elements.

The information about the PUCCH resource set indicated by the PUCCH resource set configuration information includes the first PRB offset, and the first PRB offset belongs to the value set of the offset. In other words, the first PRB offset belongs to the first value set or the second value set.

It should be understood that the first PRB offset is determined by using the PUCCH resource set configuration information and the value relationship between the center frequency of the first initial uplink bandwidth part BWP and the center frequency of the second initial uplink BWP. In the PUCCH configuration information table, the first terminal device determines, based on the value relationship between the center frequency of the first initial uplink bandwidth part BWP and the center frequency of the second initial uplink BWP, which column of information is used to determine the first PRB offset, and the PUCCH resource set configuration information indicates which row of information is used to determine the first PRB offset.

Further, if the first information includes the value set of the offset, the first terminal device may determine the PRB index of the PUCCH resource according to a preset second formula. The second formula is:

$$X = RB_{BWP}^{offset} + \left\lfloor \frac{r_{PUCCH}}{N_{CS}} \right\rfloor \quad (10)$$

In Formula (10), $X$ is the PRB index of the PUCCH resource, $RB_{BWP}^{offset}$ is the first PRB offset of the PUCCH resource, the first PRB offset is determined based on the PUCCH resource set configuration information and the value relationship between the center frequency of the first initial uplink bandwidth part BWP and the center frequency of the second initial uplink BWP, $r_{PUCCH}$ is the PUCCH resource index, $N_{CS}$ is a quantity of elements in the set of initial cyclic shift

indexes, and $\left\lfloor \frac{r_{PUCCH}}{N_{CS}} \right\rfloor$ represents rounding down a result of $\frac{r_{PUCCH}}{N_{CS}}$.

It should be noted that the determined PUCCH resource associated with the PRB index is used by the first terminal device to transmit the UCI. In other words, the first initial uplink BWP includes the PUCCH resource associated with the PRB index. The information about the PUCCH resource set indicated by the PUCCH resource set configuration information includes the first PRB offset and the set of initial cyclic shift indexes.

Examples are used for description below. It should be understood that an example in which the PUCCH configuration table is Table 2 is used herein for description.

(1) In the system information, the network device indicates, to the first terminal device, that PUCCH frequency hopping is disabled, and separately indicates: A start position of the first initial uplink BWP is a PRB of a number of 100, where the number of PRB herein is a number of PRB in a system bandwidth, and the bandwidth is 100 PRBs, that is, the bandwidth of the first initial uplink BWP includes 100 PRBs; and a start position of the second initial uplink BWP is a PRB of a number of 0, where the number of PRB herein is a number of PRB in the system bandwidth, and the bandwidth is 200 PRBs, that is, the bandwidth of the second initial uplink BWP includes 200 PRBs. The first terminal device determines that the center frequency of the first initial uplink BWP is a PRB of a number of 150, and the center frequency of the second initial uplink BWP is a PRB of a number of 100. Therefore, the first terminal device determines that the center frequency of the first initial uplink BWP is greater than the center frequency of the second initial uplink BWP, and determines that the value set of the offset is the PRB offset 2.

In addition, in the system information, the network device indicates, to the first terminal device, that the PUCCH resource set configuration information is "0011", corresponding to a row in which an index 3 is located in Table 2. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to $N_{BWP}^{size} - 8$, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH} = 3$ is indicated in scheduling DCI. In this case, the terminal device may determine a number of a PRB corresponding to the PUCCH resource used to feed back Msg4, that is, a number of the PUCCH resource in the first initial uplink BWP is:

$$X = RB_{BWP}^{offset} + \left\lfloor \frac{r_{PUCCH}}{N_{CS}} \right\rfloor = N_{BWP}^{size} - 8 + \left\lfloor \frac{r_{PUCCH}}{N_{CS}} \right\rfloor = 100 - 8 + \left\lfloor \frac{3}{2} \right\rfloor = 93.$$

(2) In the system information, the network device indicates, to the first terminal device, that PUCCH frequency hopping is disabled, and separately indicates: A start position of the first initial uplink BWP is a PRB of a number of 0, where the number of PRB herein is a number of PRB in a system bandwidth, and the bandwidth is 100 PRBs, that is, the bandwidth of the first initial uplink BWP includes 100 PRBs; and a start position of the second initial uplink BWP is a PRB of a number of 0, where the number of PRB herein is a number of PRB in the system bandwidth, and the bandwidth is 200 PRBs, that is, the bandwidth of the second initial uplink BWP includes 200 PRBs. The first terminal device determines that the center frequency of the first initial uplink BWP is a PRB of a number of 50, and the center frequency of the second initial uplink BWP is a PRB of a number of 100. Therefore, the first terminal device determines that the center frequency of the first initial uplink BWP is less than the center frequency of the second initial uplink BWP, and determines that the value set of the offset is the PRB offset 1.

In addition, in the system information, the network device indicates, to the first terminal device, that the PUCCH resource set configuration information is "0011", corresponding to a row in which an index 3 is located in Table 2. Based on the PUCCH resource set configuration information, the first terminal device may learn that in the initial uplink BWP, the PUCCH format is set to 1, the first symbol is set to 10, the quantity of symbols is set to 4, the PRB offset (an example of the first PRB offset) is set to 0, and the set of initial cyclic shift indexes is set to {0, 6}. It is assumed that the width of the first initial uplink BWP is 100 PRBs, that is, the bandwidth of the first initial uplink BWP includes 100 PRBs.

If the network device sends Msg4 to the terminal device in the random access process, $r_{PUCCH} = 3$ is indicated in scheduling DCI. In this case, the terminal device may determine a number of a PRB corresponding to the PUCCH resource used to feed back Msg4, that is, a number of the PUCCH resource in the first initial uplink BWP is:

$$ X = RB_{BWP}^{offset} + \left\lfloor \frac{r_{PUCCH}}{N_{CS}} \right\rfloor = 0 + \left\lfloor \frac{3}{2} \right\rfloor = 1 . $$

Therefore, in this application, the first terminal device may determine, based on the value relationship between the center frequency of the first initial uplink BWP and the center frequency of the second initial uplink BWP, to use the first value set or the second value set to determine the PRB index of the PUCCH resource. In other words, the PUCCH resource can be located at the upper edge or the lower edge of the first initial BWP, and frequency hopping is not performed, thereby avoiding spectrum resource fragmentation of another terminal device and improving resource utilization.

In addition, in this embodiment of this application, a larger continuous bandwidth can be configured for a normal terminal device, to improve a transmission rate of the terminal device.

In addition, processing complexity of the terminal device can be reduced by using the indication of the network device.

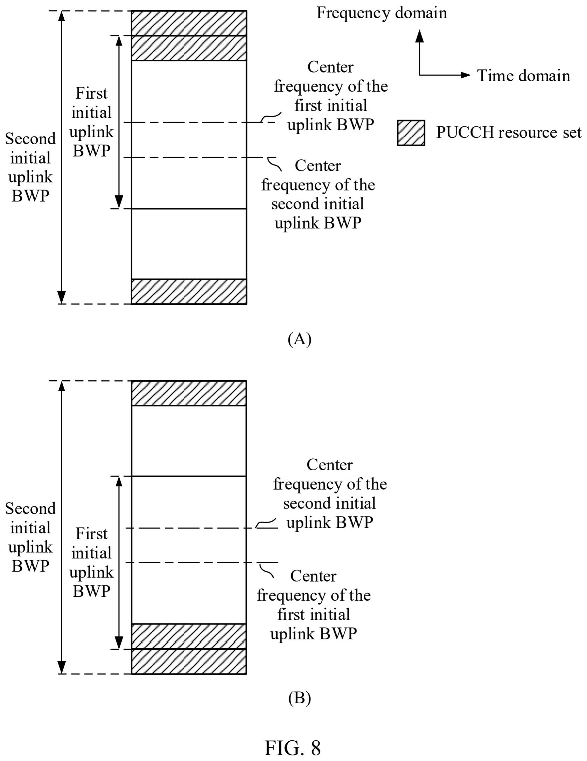

It should be understood that before the first terminal device determines the PRB index, the network device first separately configures the initial uplink BWP for the first terminal device and the second terminal device, and configures the PUCCH resource set in the initial uplink BWP. The initial uplink BWP configured for the first terminal device may be referred to as the first initial uplink BWP, and the initial uplink BWP configured for the second terminal device may be referred to as the second initial uplink BWP. The first initial uplink BWP and the second initial uplink BWP are configured by using the system information. After obtaining the system information, the first terminal device may determine the frequency positions of the first initial uplink BWP and the second initial uplink BWP. Further, the first terminal device determines the center frequency of the first initial uplink BWP based on the frequency position of the first initial uplink BWP, and determines the center frequency of the second initial uplink BWP based on the frequency position of the second initial uplink BWP. The PUCCH resource set of the first terminal device may be located at the upper edge of the first initial uplink BWP. In this case, the first initial uplink BWP is closer to the upper edge of the second initial uplink BWP, and the center frequency of the first initial uplink BWP is greater than the center frequency of the second initial uplink BWP, as shown in (A) in FIG. 8. The PUCCH resource set of the first terminal device may be located at the lower edge of the first initial uplink BWP. In this case, the first initial uplink BWP is closer to the lower edge of the second initial uplink BWP, and the center frequency of the first initial uplink BWP is less than the center frequency of the second initial uplink BWP, as shown in (B) in FIG. 8. When terminal devices with different capabilities coexist in a communication network, the PUCCH resource set of the first terminal device is disposed at the upper edge or the lower edge of the first initial uplink BWP. This can avoid spectrum resource fragmentation of another terminal device and improve resource utilization.

In a possible implementation, the PUCCH resource set configuration information and the configuration information of the initial uplink BWP may be sent in same information. For example, both the PUCCH resource set configuration information and the configuration information of the initial uplink BWP are carried in the third information, and the third information is SIB1, downlink control information DCI for scheduling SIB1, or a master information block MIB. The configuration information of the initial uplink BWP includes configuration information of the first initial uplink BWP and configuration information of the second initial uplink BWP. The configuration information of the first initial uplink BWP indicates information such as a bandwidth size, a frequency position, and a time domain position of the first initial uplink BWP. The configuration information of the second initial uplink BWP indicates information such as a bandwidth size, a frequency position, and a time domain position of the second initial uplink BWP.

Optionally, the third information may be other SIB information or other system information, for example, SIB2 or SIB3.

In an implementation, the method further includes: The network device sends second indication information to the first terminal device, where the second indication information indicates that no frequency hopping is performed on the PUCCH resource. In other words, the network device may indicate the first terminal device to disable frequency hopping of the PUCCH resource. In this way, the PUCCH resource of the first terminal device may be close to the upper edge or the lower edge of the initial uplink BWP, to avoid resource fragmentation and improve resource utilization. In addition, if the network device indicates that PUCCH resource frequency hopping is disabled, the first terminal device may determine, by default, the first information based on the value relationship between the center frequency of the first initial uplink bandwidth part BWP and the center frequency of the second initial uplink BWP in this case. In other words, that the network device indicates that PUCCH resource frequency hopping is disabled may be used as an implicit indication for the first terminal device to acknowledge the first information.

Optionally, the second indication information may be indicated by using one bit, and values 0 and 1 respectively indicate that frequency hopping is not disabled and that frequency hopping is disabled. The first terminal device may determine, based on the second indication information, whether there is frequency hopping on the PUCCH resource.

Optionally, the second indication information may also be carried in the third information.

In a possible implementation, after S430, the method 400 further includes: S402: The first terminal device transmits uplink control information UCI on a resource associated with the PRB index.

In a possible implementation, the first terminal device is a first-type terminal device, and the second terminal device is a second-type terminal device.

Optionally, the first terminal device is a reduced capability terminal device, and the second terminal device is a normal terminal device.

It should be noted that in this application, the first initial uplink BWP is configured on one side of a carrier, and PUCCH frequency hopping is disabled, so that the PUCCH resources of the first terminal device and the second terminal device are both located on two sides of the carrier. This avoids a resource fragmentation problem. For example, in (A) in FIG. 7, the network device configures the first initial uplink BWP on one side of the second initial uplink BWP, and configures the PUCCH resource set of the first terminal device at a position close to a higher frequency. In this way, all PUCCH resource sets in a system are located on two sides of a carrier, and areas between the two PUCCH resource sets are continuous. This avoids the resource fragmentation problem.

It should be further noted that, after the first initial uplink BWP is configured for the first terminal device and the PUCCH resource frequency hopping of the first terminal device is disabled, a current PUCCH resource set indication manner and a current PUCCH resource indication manner are not used. According to the method in this application, a PUCCH resource without frequency hopping can be indicated, and a scenario with frequency hopping is compatible, and therefore, an application range is wider.

In addition, after resource fragmentation is avoided in the solutions of this application, a limitation on resource scheduling of the network device can also be reduced.

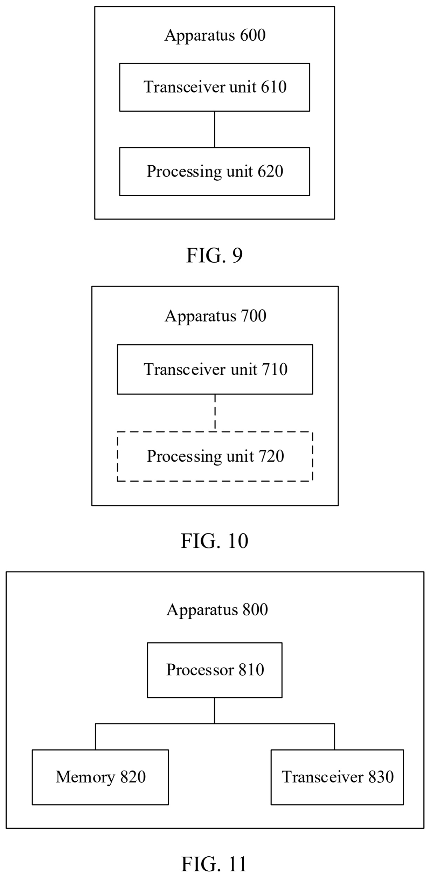

The foregoing describes in detail the technical solutions provided in the communication methods in embodiments of this application with reference to FIG. 1 to FIG. 8. The following describes communication apparatuses provided in embodiments of this application with reference to FIG. 9 to FIG. 11.

FIG. 9 is a schematic block diagram of a communication apparatus according to an embodiment of this application. As shown in FIG. 9, the apparatus 600 may be a first terminal device, or may be a component (for example, a unit, a module, a chip, or a chip system) configured in the first terminal device. The apparatus 600 may include a transceiver unit 610 and a processing unit 620.

The transceiver unit 610 is configured to perform receiving and sending related operations on a side of the first terminal device in the foregoing method embodiments. For example, the transceiver unit 610 is configured to receive second information, where the second information includes a physical uplink control channel PUCCH resource index.

The processing unit 620 is configured to perform processing-related operations on a side of the terminal device in the foregoing method embodiments. For example, the processing unit 620 is configured to determine a PRB index of a PUCCH resource based on first information and the PUCCH resource index, where the PUCCH resource is used by the first terminal device to transmit uplink control information.

It should be understood that the processing unit 620 and the transceiver unit 610 may further separately perform any other step, operation, and/or function implemented by the first terminal device in the method 400. A specific process of performing the foregoing corresponding step by each unit is described in detail in the foregoing method embodiments. For brevity, details are not described herein again.

It should be understood that the apparatus 600 herein is embodied in a form of a functional unit. The term "unit" herein may be an ASIC, an electronic circuit, a processor (for example, a shared processor, a dedicated processor, or a processor group) configured to execute one or more software or firmware programs, a memory, a combined logic circuit, and/or another appropriate component supporting the described functions. In an optional example, a person skilled in the art may understand that, the apparatus 600 may be specifically the terminal device in the embodiment of the foregoing method 400; and the apparatus 600 may be configured to perform procedures and/or steps corresponding to the terminal device in the embodiment of the foregoing method 400. To avoid repetition, details are not described herein again.

It should be further understood that, in an implementation, the transceiver unit 610 may include a receiving unit 611 and a sending unit 612. The receiving unit 611 is configured to perform a receiving function in the transceiver unit 610, for example, receive the second information from a network device. The sending unit 612 is configured to perform a sending function in the transceiver unit 610, for example, send the UCI to the network device.

FIG. 10 is a schematic block diagram of a communication apparatus according to an embodiment of this application. As shown in FIG. 10, the apparatus 700 may be a network device, or may be a component (for example, a unit, a module, a chip, or a chip system) configured in the network device. The apparatus 700 includes a transceiver unit 710.

The transceiver unit 710 is configured to perform receiving and sending related operations on a side of the network device in the foregoing method embodiments. For example, the transceiver unit 710 is configured to send third information to a terminal device, where the third information includes first indication information, the first indication information indicates a first formula or a value set of an offset, and the first formula or the value set of the offset is used to determine a physical resource block PRB index.

Optionally, the apparatus may further include a processing unit 720. The processing unit 720 is configured to perform processing-related operations on a side of the network device in the foregoing method embodiments. For example, the processing unit 720 is configured to determine that the first formula is Formula (5) or Formula (6).

It should be understood that the processing unit 720 and the transceiver unit 710 may further separately perform any other step, operation, and/or function implemented by the network device in the method 400. A specific process of performing the foregoing corresponding step by each unit is described in detail in the foregoing method embodiments. For brevity, details are not described herein again.

It should be further understood that the apparatus 700 herein is embodied in a form of a functional unit. The term "unit" herein may be an ASIC, an electronic circuit, a processor (for example, a shared processor, a dedicated processor, or a processor group) configured to execute one or more software or firmware programs, a memory, a combined logic circuit, and/or another appropriate component supporting the described functions. In an optional example, a person skilled in the art may understand that, the apparatus 700 may be specifically the network device in the embodiment of the foregoing method 400; and the apparatus 700 may be configured to perform procedures and/or steps corresponding to the network device in the embodiment of the foregoing method 400. To avoid repetition, details are not described herein again.

It should be further understood that, in an implementation, the transceiver unit 710 may include a receiving unit 711 and a sending unit 712. The receiving unit 711 is configured to perform a receiving function in the transceiver unit 710, for example, receive UCI. The sending unit 712 is configured to perform a sending function in the transceiver unit 710, for example, send the third information and second information to the terminal device.

FIG. 11 is a block diagram of a structure of a communication apparatus 800 according to an embodiment of this application. As shown in FIG. 11, the apparatus 800 includes a processor 810, a memory 820, and a transceiver 830. The processor 810 is coupled to the memory 820, and is configured to execute instructions stored in the memory 820, to control the transceiver 830 to send a signal and/or receive a signal.

It should be understood the processor 810 and the memory 820 may be integrated into one processing apparatus. The processor 810 is configured to execute program code stored in the memory 820 to implement the foregoing functions. During specific implementation, the memory 820 may also be integrated into the processor 810, or may be independent of the processor 810. It should be understood that the processor 810 may alternatively correspond to each processing unit in the foregoing communication apparatuses, and the transceiver 830 may correspond to each receiving unit and each sending unit in the foregoing communication apparatuses.

It should be further understood that the transceiver 830 may include a receiver (or referred to as a receive machine) and a transmitter (or referred to as a transmit machine). The transceiver may further include an antenna. There may be one or more antennas. The transceiver may be further a communication interface or an interface circuit.

Specifically, the communication apparatus 800 may correspond to the first terminal device in the method 400 according to embodiments of this application, or the network device in the method 400. It should be understood that a specific process in which the units perform the foregoing corresponding steps is described in detail in the foregoing method embodiments. For brevity, details are not described herein again.

When the communication apparatus 800 is a chip, the chip includes a transceiver unit and a processing unit. The transceiver unit may be an input/output circuit or a communication interface. The processing unit may be a processor, a microprocessor, or an integrated circuit that is integrated on the chip.

In a possible design, the apparatus 800 may be replaced with a chip apparatus, for example, may be a communication chip that may be used in the apparatus, and is configured to implement related functions of the processor 810 in the apparatus. The chip apparatus may be a field programmable gate array, a dedicated integrated chip, a system chip, a central processing unit, a network processor, a digital signal processing circuit, a microcontroller, a programmable controller, or another integrated chip for implementing related functions. Optionally, the chip may include one or more memories, configured to store program code. When the code is executed, the processor is enabled to implement a corresponding function.

Optionally, the memory and the processor in the foregoing embodiments may be units that are physically independent of each other, or the memory may also be integrated with the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a system. The system includes the foregoing one or more terminal devices and one or more network devices.

All or a part of the foregoing embodiments may be implemented by using software, hardware, firmware, or any combination thereof. When the software is used to implement the foregoing embodiments, all or some of the foregoing embodiments may be implemented in a form of a computer program product. The computer program product includes one or more computer instructions. When the computer instructions are loaded and executed on the computer, the procedure or functions according to the foregoing embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the word such as "example" or "for example" is used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" indicates one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be further understood that in embodiments of this application, "first", "second", and various numerical numbers are merely used for distinguishing for ease of description, and are not used to limit the scope of embodiments of this application. For example, different indication information is differentiated.

A person of ordinary skill in the art may be aware that, in combination with the examples described in embodiments disclosed in this specification, units and algorithm steps may be implemented by electronic hardware or a combination of computer software and electronic hardware. Whether functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

Further embodiments of the present invention are provided in the following. It should be noted that the numbering used in the following section does not necessarily need to comply with the numbering used in the previous sections.

Embodiment 1. A communication method, comprising:

obtaining, by a first terminal device, first information, wherein the first information comprises a first formula or a value set of an offset, and the first formula or the value set of the offset is used to determine a physical resource block PRB index;

receiving, by the first terminal device, second information, wherein the second information comprises a physical uplink control channel PUCCH resource index; and

determining, by the first terminal device, a PRB index of a PUCCH resource based on the first information and the PUCCH resource index, wherein the PUCCH resource is used by the first terminal device to transmit uplink control information.

Embodiment 2. The method according to embodiment 1, wherein the method further comprises:

receiving, by the first terminal device, third information from a network device, wherein the third information comprises first indication information, and the first indication information indicates the first formula or the value set of the offset.

Embodiment 3. The method according to embodiment 2, wherein the third information further comprises PUCCH resource set configuration information, and the PUCCH resource set configuration information is used to determine the PRB index of the PUCCH resource.

Embodiment 4. The method according to embodiment 2 or 3, wherein the first indication information indicates the first formula, and the first formula is

$$X = N_{BWP}^{size} - 1 - RB_{BWP}^{offset} - \left\lfloor \frac{r_{PUCCH}}{N_{CS}} \right\rfloor$$ or $$X = RB_{BWP}^{offset} + \left\lfloor \frac{r_{PUCCH}}{N_{CS}} \right\rfloor$$ , wherein

$X$ is the PRB index of the PUCCH resource, $N_{BWP}^{size}$ is a quantity of PRBs comprised in a bandwidth of a first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and the PUCCH resource set configuration information indicates the first PRB offset and the set of initial cyclic shift indexes.

Embodiment 5. The method according to embodiment 2 or 3, wherein the first indication information indicates the value set of the offset, the value set of the offset is a first value set of a PRB offset of the PUCCH resource or a second value set of a PRB offset of the PUCCH resource, a value of the PRB offset in the second value set is $N_{BWP}^{size} - Y$, the PUCCH resource set configuration information indicates a first PRB offset and a set of initial cyclic shift indexes, the value set of the offset comprises the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor ,$$

wherein

$X$ is the PRB index of the PUCCH resource, $N_{BWP}^{size}$ is a quantity of PRBs comprised in a bandwidth of a first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and $Y$ is a positive integer.

Embodiment 6. The method according to embodiment 1, wherein the obtaining, by a first terminal device, first information comprises:

determining, by the first terminal device, the first information based on a value relationship between a center frequency of a first initial uplink bandwidth part BWP and a center frequency of a second initial uplink BWP, wherein the first initial uplink BWP comprises the PUCCH resource, the second initial uplink BWP is used by a second terminal device to perform uplink transmission, and a maximum channel bandwidth supported by the second terminal device is greater than a maximum channel bandwidth supported by the first terminal device.

Embodiment 7. The method according to embodiment 6, wherein the method further comprises:

receiving, by the first terminal device, third information from a network device, wherein the third information comprises PUCCH resource set configuration information, and the PUCCH resource set configuration information is used to determine the PRB index of the PUCCH resource.

Embodiment 8. The method according to embodiment 6 or 7, wherein the first information comprises the first formula, and the determining, by the first terminal device, the first information based on a value relationship between a center frequency of a first initial uplink bandwidth part BWP and a center frequency of a second initial uplink BWP comprises:

when the center frequency of the first initial uplink BWP is greater than the center frequency of the second initial uplink BWP, determining, by the first terminal device, that the first formula is

$$X = N_{BWP}^{size} - 1 - RB_{BWP}^{offset} - \left\lfloor \frac{r_{PUCCH}}{N_{CS}} \right\rfloor ; or$$

when the center frequency of the first initial uplink BWP is less than the center frequency of the second initial uplink BWP, determining, by the first terminal device, that the first formula is

$$X = RB_{BWP}^{offset} + \left\lfloor \frac{r_{PUCCH}}{N_{CS}} \right\rfloor$$

, wherein

$X$ is the PRB index of the PUCCH resource, $N_{BWP}^{size}$ is a quantity of PRBs comprised in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and the PUCCH resource set configuration information indicates the first PRB offset and the set of initial cyclic shift indexes.

Embodiment 9. The method according to embodiment 6 or 7, wherein the first information comprises the value set of the offset, and the determining, by the first terminal device, the first information based on a value relationship between a center frequency of a first initial uplink bandwidth part BWP and a center frequency of a second initial uplink BWP comprises:

when the center frequency of the first initial uplink BWP is greater than the center frequency of the second initial uplink BWP, determining, by the first terminal device, that the value set of the offset is a second value set of a PRB offset of the PUCCH resource, wherein a value of the PRB offset in the second value set is $N_{BWP}^{size} - Y$; or

when the center frequency of the first initial uplink BWP is less than the center frequency of the second initial uplink BWP, determining, by the first terminal device, that the value set of the offset is a first value set of a PRB offset of the PUCCH resource, wherein

the PUCCH resource set configuration information indicates a first PRB offset and a set of initial cyclic shift indexes, the value set of the offset comprises the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor ,$$

wherein

$X$ is the PRB index of the PUCCH resource, $N_{BWP}^{size}$ is a quantity of PRBs comprised in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and $Y$ is a positive integer.

Embodiment 10. The method according to any one of embodiments 7 to 9, wherein the third information further indicates a frequency position of the first initial uplink BWP and a frequency position of the second initial uplink BWP, and the method further comprises:

determining, by the first terminal device, the center frequency of the first initial uplink BWP based on the frequency position of the first initial uplink BWP, and determining the center frequency of the second initial uplink BWP based on the frequency position of the second initial uplink BWP.

Embodiment 11. The method according to any one of embodiments 2 to 5 and 7 to 10, wherein the third information is a system information block 1 SIB1, downlink control information DCI for scheduling SIB1, or a master information block MIB.

Embodiment 12. The method according to any one of embodiments 2 to 5 and 7 to 11, wherein the third information further indicates that no frequency hopping is performed on the PUCCH resource.

Embodiment 13. The method according to any one of embodiments 1 to 12, wherein the method further comprises: transmitting, by the first terminal device, the uplink control information on a resource associated with the PRB index.

Embodiment 14. The method according to any one of embodiments 1 to 13, wherein the first terminal device is a reduced capability terminal device.

Embodiment 15. A communication method, comprising:

sending, by a network device, third information to a first terminal device, wherein the third information comprises first indication information, the first indication information indicates a first formula or a value set of an offset, and the first formula or the value set of the offset is used to determine a physical resource block PRB index; and

sending, by the network device, second information to the first terminal device, wherein the second information comprises a physical uplink control channel PUCCH resource index, first information and the PUCCH resource index are used to determine a PRB index of a PUCCH resource, and the PUCCH resource is used by the first terminal device to transmit uplink control information.

Embodiment 16. The method according to embodiment 15, wherein the third information further comprises PUCCH resource set configuration information, and the PUCCH resource set configuration information is used to determine the PRB index of the PUCCH resource.

Embodiment 17. The method according to embodiment 15 or 16, wherein the first information indicates the first formula, and the method further comprises:

when a PUCCH resource set of the first terminal device is located at an upper edge of a first initial uplink bandwidth part BWP, determining, by the network device, that the first formula is

$$X = N_{BWP}^{size} - 1 - RB_{BWP}^{offset} - \left\lfloor \frac{r_{PUCCH}}{N_{CS}} \right\rfloor;$$

or

when a PUCCH resource set of the first terminal device is located at a lower edge of a first initial uplink BWP, determining, by the network device, that the first formula is

$$X = RB_{BWP}^{offset} + \left\lfloor \frac{r_{PUCCH}}{N_{CS}} \right\rfloor, \text{ wherein}$$

$X$ is the PRB index of the PUCCH resource, $N_{BWP}^{size}$ is a quantity of PRBs comprised in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and the PUCCH resource set configuration information indicates the first PRB offset and the set of initial cyclic shift indexes.

Embodiment 18. The method according to embodiment 15 or 16, wherein the first indication information indicates the value set of the offset, and the method further comprises:

when a PUCCH resource set of the first terminal device is located at an upper edge of a first initial uplink bandwidth part BWP, determining, by the network device, that the value set of the offset is a second value set of a PRB offset of the PUCCH resource, wherein a value of the PRB offset in the second value set is $N_{BWP}^{size} - Y$; or

when a PUCCH resource set of the first terminal device is located at a lower edge of a first initial uplink BWP, determining, by the network device, that the value set of the offset is a first value set of a PRB offset of the PUCCH resource, wherein

the PUCCH resource set configuration information indicates a first PRB offset and a set of initial cyclic shift indexes, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

wherein

$X$ is the PRB index of the PUCCH resource, $N_{BWP}^{size}$ is a quantity of PRBs comprised in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and $Y$ is a positive integer.

Embodiment 19. A communication method, comprising:

sending, by a network device, third information to a first terminal device, wherein the third information indicates a frequency position of a first initial uplink bandwidth part BWP and a frequency position of a second initial uplink BWP, the frequency position of the first initial uplink BWP and the frequency position of the second initial uplink BWP are used to determine first information, the first information comprises a first formula or a value set of an offset, and the first formula or the value set of the offset is used to determine a physical resource block PRB index; and

sending, by the network device, second information to the first terminal device, wherein the second information comprises a physical uplink control channel PUCCH resource index, the first information and the PUCCH resource index are used to determine a PRB index of a PUCCH resource, and the PUCCH resource is used by the first terminal device to transmit uplink control information, wherein

the first initial uplink BWP comprises the PUCCH resource, the second initial uplink BWP is used by a second terminal device to perform uplink transmission, and a maximum channel bandwidth supported by the second terminal device is greater than a maximum channel bandwidth supported by the first terminal device.

Embodiment 20. The method according to embodiment 19, wherein the third information further comprises PUCCH resource set configuration information, and the PUCCH resource set configuration information is used to determine the PRB index of the PUCCH resource.

Embodiment 21. The method according to embodiment 19 or 20, wherein the first information comprises the first formula, and the first formula is $X = N_{BWP}^{size} - 1 - RB_{BWP}^{offset} - \left\lfloor \frac{r_{PUCCH}}{N_{CS}} \right\rfloor$ or $X = RB_{BWP}^{offset} + \left\lfloor \frac{r_{PUCCH}}{N_{CS}} \right\rfloor$, wherein $X$ is the PRB index of the PUCCH resource, $N_{BWP}^{size}$ is a quantity of PRBs comprised in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and the PUCCH resource set configuration information indicates the first PRB offset and the set of initial cyclic shift indexes.

Embodiment 22. The method according to embodiment 19 or 20, wherein the first information comprises the value set of the offset, the value set of the offset is a first value set of a PRB offset of the PUCCH resource or a second value set of a PRB offset of the PUCCH resource, a value of the PRB offset in the second value set is $N_{BWP}^{size} - Y$, the PUCCH resource set configuration information indicates a first PRB offset and a set of initial cyclic shift indexes, the value set of the offset comprises the first PRB offset, and the PRB index of the PUCCH resource, the first PRB offset, and the PUCCH resource index satisfy the following correspondence:

$$X = RB_{BWP}^{offset} + \left\lfloor \frac{r_{PUCCH}}{N_{CS}} \right\rfloor,$$

wherein

$X$ is the PRB index of the PUCCH resource, $N_{BWP}^{size}$ is a quantity of PRBs comprised in a bandwidth of the first initial uplink BWP, $RB_{BWP}^{offset}$ is the first PRB offset, $r_{PUCCH}$ is the PUCCH resource index, $N_{CS}$ is a quantity of elements in the set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and $Y$ is a positive integer.

Embodiment 23. The method according to any one of embodiments 15 to 22, wherein the third information is a system information block 1 SIB1, downlink control information DCI for scheduling SIB1, or a master information block MIB.

Embodiment 24. The method according to any one of embodiments 15 to 23, wherein the third information further indicates that no frequency hopping is performed on the PUCCH resource.

Embodiment 25. The method according to any one of embodiments 15 to 14, wherein the first terminal device is a reduced capability terminal device.

Embodiment 26. A communication apparatus, comprising units configured to perform steps of the method according to any one of claims 1 to 25.

Embodiment 27. A communication apparatus, comprising:

a memory, configured to store computer instructions; and
a processor, configured to execute the computer instructions stored in the memory, so that the apparatus performs the method according to any one of claims 1 to 25.

Embodiment 28. A computer-readable storage medium, wherein the computer-readable storage medium stores a computer program, and the computer program is configured to perform the method according to any one of claims 1 to 25.

Embodiment 29. A computer program product, wherein when the computer program product runs on a computer, the computer is enabled to perform the method according to any one of claims 1 to 25.

Embodiment 30. A chip system, comprising a processor, wherein the processor is configured to execute a stored computer program, and the computer program is configured to perform the method according to any one of claims 1 to 25.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

obtaining (S410), by a first apparatus (120), a first formula, and the first formula is used to determine a physical resource block, PRB, index;
determining (S430), by the first terminal device, a PRB index of a PUCCH resource based on the first formula and a physical uplink control channel, PUCCH, resource index, wherein the PUCCH resource is used by a first apparatusto transmit uplink control information;
wherein the method further comprises:

receiving, by the first terminal device, third information, wherein the third information comprises first indication information, and the first indication information indicates the first formula;
wherein the method further comprises:

when a PUCCH resource set of the first apparatus is located at an upper edge of a first initial uplink bandwidth part, BWP, determining that the first formula is

$$X = N_{BWP}^{size} - 1 - RB_{BWP}^{offset} - \left\lfloor \frac{r_{PUCCH}}{N_{CS}} \right\rfloor ;$$

when the PUCCH resource set of the first apparatus is located at a lower edge of a first initial uplink BWP, determining that the first formula is

$$X = RB_{BWP}^{offset} + \left\lfloor \frac{r_{PUCCH}}{N_{CS}} \right\rfloor ,$$

wherein the PUCCH resource set includes 16 PUCCH resources,

$X$ is the PRB index of the PUCCH resource, $N_{BWP}^{size}$ is a quantity of PRBs comprised in a bandwidth of the first initial uplink BWP, $RB_{BWP}^{offset}$ is a first PRB offset of the PUCCH resource, $r_{PUCCH}$ is the PUCCH resource index, $N_{CS}$ is a quantity of elements in a set of initial cyclic shift indexes, $\left\lfloor \frac{r_{PUCCH}}{N_{CS}} \right\rfloor$ indicates rounding down a result of $\frac{r_{PUCCH}}{N_{CS}}$, the first initial uplink BWP comprises the PUCCH resource, and a PUCCH resource set configuration information indicates the first PRB offset and the set of initial cyclic shift indexes;

wherein the third information further indicates that no frequency hopping is performed on the PUCCH resource.

2. The method according to claim 1, wherein the third information further comprises the PUCCH resource set configuration information, and the PUCCH resource set configuration information is used to determine the PRB index of the PUCCH resource.

3. The method according to claim 1 or 2, wherein the third information is a system information block **1,** SIB1, downlink control information, DCI, for scheduling SIB1, or a master information block, MIB.

4. The method according to any one of claims 1 to 3, further comprising:
   receiving (S420), by the first apparatus, second information, wherein the second information comprises a physical uplink control channel, PUCCH, resource index.

5. The method according to any one of claims 1 to 3, wherein the first apparatus is a first terminal device or a chip in the terminal device.

6. A communication method, comprising:

   sending, by a network device (110), third information, wherein the third information comprises first indication information, the first indication information indicates a first formula, and the first formula is used to determine a physical resource block, PRB, index , wherein the first formula and a physical uplink control channel, PUCCH, resource index are used to determine a PRB index of a PUCCH resource, and the PUCCH resource is used by a first terminal device to transmit uplink control information, and the third information further indicates that no frequency hopping is performed on the PUCCH resource;
   wherein the method further comprises:

   when a PUCCH resource set of the first terminal device is located at an upper edge of a first initial uplink bandwidth part BWP, determining, by the network device, that the first formula is

   $$X = N_{BWP}^{size} - 1 - RB_{BWP}^{offset} - \left\lfloor \frac{r_{PUCCH}}{N_{CS}} \right\rfloor ;$$

   when the PUCCH resource set of the first terminal device is located at a lower edge of a first initial uplink BWP, determining, by the network device, that the first formula is $X = RB_{BWP}^{offset} + \left\lfloor \dfrac{r_{PUCCH}}{N_{CS}} \right\rfloor$ , wherein the PUCCH resource set includes 16 PUCCH resources,

$X$ is the PRB index of the PUCCH resource, $N_{BWP}^{size}$ is a quantity of PRBs comprised in a bandwidth of the first initial uplink BWP, $RB_{BWP}^{offset}$ is a first PRB offset of the PUCCH resource, $r_{PUCCH}$ is the PUCCH resource index,

$N_{CS}$ is a quantity of elements in a set of initial cyclic shift indexes, $\left\lfloor \dfrac{r_{PUCCH}}{N_{CS}} \right\rfloor$ indicates rounding down a

result of $\dfrac{r_{PUCCH}}{N_{CS}}$ , the first initial uplink BWP comprises the PUCCH resource, and a PUCCH resource set configuration information indicates the first PRB offset and the set of initial cyclic shift indexes.

7. The method according to claim 6, wherein the third information further comprises the PUCCH resource set configuration information, and the PUCCH resource set configuration information is used to determine the PRB index of the PUCCH resource.

8. The method according to claim 6 or 7, further comprising:
   sending, by the network device, second information, wherein the second information comprises the PUCCH resource index.

9. The method according to any one of claims 6 to 8, wherein the third information is a system information block **1,** SIB1, downlink control information, DCI, for scheduling SIB1, or a master information block, MIB.

10. A communication apparatus (600, 800), which is configured to perform steps of the method according to any one of claims 1 to 5.

11. The communication apparatus according to claim 10, wherein the communication apparatus is a first terminal device or a chip in the terminal device.

12. A communication apparatus (700, 800), which is configured to perform steps of the method according to any one of claims 6 to 9.

13. A computer-readable storage medium, wherein the computer-readable storage medium stores a computer program, and the computer program is configured to perform the method according to any one of claims 1 to 9.

14. A computer program product, wherein when the computer program product runs on a computer, the computer is enabled to perform the method according to any one of claims 1 to 9.

100

Network device
110

Terminal device
120

FIG. 1

200

| Network device | Terminal device |

S201: PUCCH resource set
configuration information

S210: DCI

S220: Downlink data

S230: ACK/NACK

FIG. 2

300

```
┌──────────────────┐                    ┌──────────────────┐
│  Network device  │                    │  Terminal device │
└──────────────────┘                    └──────────────────┘
```

S301: Random access request (Msg1)

S302: Random access response (Msg2)

S303: First uplink scheduling transmission information (Msg3)

S304: Contention resolution message (Msg4)

## FIG. 3

Frequency domain

Time domain

PUCCH resource set

PUCCH (frequency hopping)

$W_1$

$W_2$

$W_2$

Second segment

First segment

(A)

(B)

## FIG. 4

FIG. 5

<u>400</u>

```
┌─────────────────────┐                                    ┌─────────────────────┐
│ First terminal device│                                    │   Network device    │
└─────────────────────┘                                    └─────────────────────┘
```

S401: PUCCH resource set
configuration information

┌──────────────────────────────────┐
│ S410: Obtain first information,   │
│ where the first information       │
│ includes a first formula or a     │
│ value set of an offset            │
└──────────────────────────────────┘

S420: Second information
including a PUCCH resource index

┌──────────────────────────────────┐
│ S430: Determine a PRB index of a  │
│ PUCCH resource                    │
└──────────────────────────────────┘

S402: Send UCI on the PUCCH resource

FIG. 6

(A)

(B)

Frequency domain

Time domain

PUCCH resource set

FIG. 7

Frequency domain

Time domain

PUCCH resource set

Second initial uplink BWP

First initial uplink BWP

Center frequency of the first initial uplink BWP

Center frequency of the second initial uplink BWP

(A)

Second initial uplink BWP

First initial uplink BWP

Center frequency of the second initial uplink BWP

Center frequency of the first initial uplink BWP

(B)

FIG. 8

Apparatus 600

Transceiver unit 610

Processing unit 620

FIG. 9

Apparatus 700

Transceiver unit 710

Processing unit 720

FIG. 10

Apparatus 800

Processor 810

Memory 820

Transceiver 830

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111022179

- CN 202111131008